# EUROPEAN PATENT APPLICATION

(11) **EP 4 832 377 A1**
(43) Date of publication of application: **28.10.2026**
(21) Application number: 25806880.8
(22) Date of filing: 13.05.2025
(51) Int. Cl.: H04B 10/25

(54) **OPTICAL NETWORK COMMUNICATION METHOD, AND COMMUNICATION APPARATUS**

(30) Priority: 21.05.2024 CN 202410638484
(71) Applicant: Huawei Technologies Co., Ltd., Shenzhen, Guangdong 518129 (CN)
(72) Inventor: WU, Xuming, Shenzhen, Guangdong 518129 (CN); ZHENG, Gang, Shenzhen, Guangdong 518129 (CN)
(74) Representative: Huawei European IPR
(86) International application number: PCT/CN2025/094515
(87) International publication number: WO 2025/241941

(57) **Abstract**

This application provides an optical network communication method and a communication apparatus. In the method, a first slave device can receive a rate scale factor from a master device. The rate scale factor is an adjustment coefficient of a first rate (namely, an attribute value of a CIR attribute/PIR attribute). The first slave device determines a second rate (namely, an effective CIR/PIR of the first slave device) based on the rate scale factor and the first rate. Therefore, even if a value of the first rate is limited, the effective CIR/PIR of the first slave device can be adjusted based on the rate scale factor. In other words, a value of the CIR/PIR used when the first slave device operates is expanded without changing the existing attribute. This resolves a problem of CIR/PIR configuration of a 50G PON and a future PON with a higher rate.

## Description

This application claims priority to Chinese Patent Application No. 202410638484.6, filed with the Chinese Patent Office on May 21, 2024 and entitled "OPTICAL NETWORK COMMUNICATION METHOD AND COMMUNICATION APPARATUS", which is incorporated herein by reference in its entirety.

### TECHNICAL FIELD

Embodiments of this application relate to the field of optical communication, and in particular, to an optical network communication method and a communication apparatus.

### BACKGROUND

Broadband access technologies have developed rapidly in recent years, and passive optical networks (passive optical networks, PONs) have been popularized and rapidly expanded on a large scale. As user data requirements increase sharply and continuously, a 10-gigabit-capable passive optical network (10-Gigabit-capable Passive Optical Networks, XG-PON) has entered a stage of large-scale deployment, and a standard of a next generation PON system (for example, a 50-gigabit-capable passive optical network (50-Gigabit-capable Passive Optical Networks, 50 GPON)) is gradually formulated and improved.

In a current standard, an optical line termination (optical line termination, OLT) in a PON network manages an optical network unit (optical network unit, ONU) in the PON network via an ONU management and control interface (ONU management and control interface, OMCI) protocol. The OMCI protocol is a master-slave, stop-wait management protocol. Generally, the OLT is a master device, and the ONU is a slave device. A basic procedure is as follows: The OLT delivers a management message and waits for a response from the ONU. When the OLT receives the response or after a timeout, the OLT continues to deliver a next message. The OLT manages and configures a managed entity (managed entity, ME) of the ONU via an OMCI message.

In the current standard, the OMCI protocol defines a committed information rate (committed information rate, CIR) attribute and a peak information rate (peak information rate, PIR) attribute of a traffic descriptor (Traffic descriptor) managed entity, to manage a CIR attribute and a PIR attribute of the ONU. The OLT configures the CIR attribute or the PIR attribute or obtains a value of the CIR attribute or a value of the PIR attribute by sending an OMCI message related to the traffic descriptor (Traffic descriptor) managed entity to the ONU. As defined in the current standard, lengths of a CIR attribute field and a PIR attribute field are both 4 bytes (bytes), and units of the CIR attribute and the PIR attribute are both bytes per second (bytes per second). Therefore, maximum values of the CIR attribute and the PIR attribute are separately 4,294,967,295, that is, a maximum CIR or a maximum PIR that can be configured based on the two attributes is 4,294,967,295 bytes/s, which is approximately 34 Gbit/s. It can be learned that the current lengths of the CIR attribute field and the PIR attribute field in the traffic descriptor managed entity are not enough to support configuration of the 50G PON and a future PON with a higher rate.

### SUMMARY

This application provides an optical network communication method and a communication apparatus, to resolve a CIR/PIR configuration problem of a 50G PON and a future PON with a higher rate.

According to a first aspect, this application provides an optical network communication method, applied to an optical network, where the optical network includes a master device and at least one slave device, and the at least one slave device includes a first slave device. The optical network communication method provided in this aspect may be performed by the first slave device in the optical network, or may be performed by a part of functional modules or a chip in the first slave device. An example in which the first slave device performs the method is used. The first slave device receives a first message from the master device, where the first message includes a rate scale factor, the rate scale factor is an adjustment coefficient of a first rate, and the first rate is a committed information rate CIR and/or a peak information rate PIR. Then, the first slave device determines a second rate of the first slave device based on the rate scale factor and the first rate, where the second rate is an effective CIR and/or an effective PIR of the first slave device.

In this aspect, the first slave device can receive the rate scale factor from the master device. The rate scale factor is the adjustment coefficient of the first rate (namely, an attribute value of a CIR attribute/PIR attribute). The first slave device determines the second rate (namely, the effective CIR/PIR of the first slave device) based on the rate scale factor and the first rate. Therefore, even if a value of the first rate is limited, the effective CIR/PIR of the first slave device can be adjusted based on the rate scale factor. In other words, a value of the CIR/PIR used when the first slave device operates is expanded without changing the existing attribute. In this way, a CIR/PIR configuration problem of a 50G PON and a future PON with a higher rate is resolved.

In a possible implementation, a default value of the rate scale factor is 1.

In a possible implementation, a value of the rate scale factor is an integer greater than 0. For example, if the value of the rate scale factor is 1, the second rate is equal to the first rate, in other words, the first slave device operates based on a CIR value and/or a PIR value that are/is indicated by the first message. If the value of the rate scale factor is greater than 1, for example, the value of the rate scale factor is a (where a is an integer greater than 1), the second rate is equal to a times the first rate, in other words, the first slave device operates based on a times a CIR value indicated by the first message and/or a times a PIR value indicated by the first message. It can be learned that, when the first message carries the rate scale factor, the master device may indicate an integer multiple of the CIR value and/or an integer multiple of the PIR value to the first slave device, so that the effective CIR and/or the effective PIR of the first slave device can be not limited to a maximum rate that can be indicated by four bytes. Therefore, the CIR/PIR configuration problem of the 50G PON and the future PON with the higher rate is resolved.

In a possible implementation, the second rate is equal to a product of the first rate and the rate scale factor.

In a possible implementation, the first message further includes identification information of a traffic descriptor managed entity. Because the CIR attribute and the PIR attribute are attributes of the traffic descriptor managed entity, the first message carries the identification information of the traffic descriptor managed entity. In other words, the rate scale factor may be a newly defined attribute of the traffic descriptor managed entity, so that the master device configures a CIR/PIR for a slave device and configures the rate scale factor in a same message. This improves efficiency of configuring the effective CIR/PIR for the slave device by the master device.

In a possible implementation, the first message further includes the first rate. For example, when a message type of the first message is a set request or a create request, the master device may configure both the rate scale factor and the first rate via the first message. This helps improve configuration efficiency.

In this case, an identification information field of a managed entity of the first message includes the identification information of the traffic descriptor managed entity. A message contents field of the first message includes an attribute value of a rate scale factor attribute, and the message contents field of the first message further includes an attribute value of the CIR attribute and/or an attribute value of the PIR attribute.

Optionally, when the message type of the first message is the set request, the message contents field of the first message further includes a first attribute mask, and a bit corresponding to the rate scale factor attribute in the first attribute mask is 1. In addition, a bit corresponding to the CIR attribute in the first attribute mask is 1, and/or a bit corresponding to the PIR attribute in the first attribute mask is 1.

In another possible implementation, a message type of the first message is a set request, and the first message may not carry the first rate. Optionally, the first rate is a default value, or the first slave device obtains the first rate via another message. For example, before the first slave device receives the first message from the master device, the first slave device receives a seventh message from the master device, where the seventh message includes identification information of a traffic descriptor managed entity and the first rate. Because the first rate and the rate scale factor may be separately indicated to the first slave device via different messages, this helps improve flexibility of configuring the rate scale factor.

In this case, an identification information field of a managed entity of the first message includes the identification information of the traffic descriptor managed entity. A message contents field of the first message includes a first attribute mask and an attribute value of a rate scale factor attribute, and a bit corresponding to the rate scale factor attribute in the first attribute mask is 1.

In a possible implementation, the rate scale factor attribute is a 10^{th} attribute of the traffic descriptor managed entity, in other words, the rate scale factor attribute is a 9^{th} attribute after a managed entity identifier attribute of the traffic descriptor managed entity. The rate scale factor attribute corresponds to a 9^{th} bit in the first attribute mask.

In a possible implementation, the first message is encapsulated in a payload field of a downstream XGEM frame, and an XGEM port identifier in a frame header of the downstream XGEM frame is the same as identification information of the first slave device.

In a possible implementation, the master device is an optical line termination OLT, and the slave device is an optical network unit ONU.

According to a second aspect, this application provides an optical network communication method, applied to an optical network, where the optical network includes a master device and at least one slave device, and the at least one slave device includes a first slave device. The optical network communication method provided in this aspect may be performed by the master device in the optical network, or may be performed by a part of functional modules or a chip in the master device. An example in which the master device performs the method is used. The master device sends a first message to the first slave device, where the first message includes a rate scale factor, the rate scale factor is an adjustment coefficient of a first rate, the first rate is a committed information rate CIR and/or a peak information rate PIR, the rate scale factor and the first rate are used to determine a second rate of the first slave device, and the second rate is an effective CIR and/or an effective PIR of the first slave device.

In a possible implementation, a default value of the rate scale factor is 1.

In a possible implementation, a value of the rate scale factor is an integer greater than 0.

In a possible implementation, the second rate is equal to a product of the first rate and the rate scale factor.

In a possible implementation, the first message further includes identification information of a traffic descriptor managed entity.

In a possible implementation, the first message further includes the first rate. For example, when a message type of the first message is a set request or a create request, the master device may configure both the rate scale factor and the first rate via the first message. This helps improve configuration efficiency.

In this case, an identification information field of a managed entity of the first message includes the identification information of the traffic descriptor managed entity. A message contents field of the first message includes an attribute value of a rate scale factor attribute, and the message contents field of the first message further includes an attribute value of a CIR attribute and/or an attribute value of a PIR attribute.

Optionally, when the message type of the first message is the set request, the message contents field of the first message further includes a first attribute mask, and a bit corresponding to the rate scale factor attribute in the first attribute mask is 1. In addition, a bit corresponding to the CIR attribute in the first attribute mask is 1, and/or a bit corresponding to the PIR attribute in the first attribute mask is 1.

In another possible implementation, a message type of the first message is a set request, and the first message may not carry the first rate. Optionally, the first rate is a default value, or the first slave device obtains the first rate via another message. For example, before the first slave device receives the first message from the master device, the first slave device receives a seventh message from the master device, where the seventh message includes identification information of a traffic descriptor managed entity and the first rate. Because the first rate and the rate scale factor may be separately indicated to the first slave device via different messages, this helps improve flexibility of configuring the rate scale factor.

In this case, an identification information field of a managed entity of the first message includes the identification information of the traffic descriptor managed entity. A message contents field of the first message includes a first attribute mask and an attribute value of a rate scale factor attribute, and a bit corresponding to the rate scale factor attribute in the first attribute mask is 1.

In a possible implementation, the rate scale factor attribute is a 10^{th} attribute of the traffic descriptor managed entity, in other words, the rate scale factor attribute is a 9^{th} attribute after a managed entity identifier attribute of the traffic descriptor managed entity. The rate scale factor attribute corresponds to a 9^{th} bit in the first attribute mask.

In a possible implementation, the first message is encapsulated in a payload field of a downstream XGEM frame, and an XGEM port identifier in a frame header of the downstream XGEM frame is the same as identification information of the first slave device.

In a possible implementation, the master device is an optical line termination OLT, and the slave device is an optical network unit ONU.

It should be noted that there are further a plurality of other specific implementations in this aspect. For details, refer to the specific implementations of the first aspect and beneficial effects thereof. Details are not described herein again.

According to a third aspect, this application provides an optical network communication method, applied to an optical network, where the optical network includes a master device and at least one slave device, and the at least one slave device includes a first slave device. The optical network communication method provided in this aspect may be performed by the first slave device in the optical network, or may be performed by a part of functional modules or a chip in the first slave device. An example in which the first slave device performs the method is used. The first slave device receives a second message from the master device, where the second message includes first indication information, the first indication information indicates the first slave device to report a rate scale factor, the rate scale factor is an adjustment coefficient of a first rate, and the first rate is a committed information rate CIR and/or a peak information rate PIR. Then, the first slave device sends a third message to the master device, where the third message includes the rate scale factor of the first slave device

In this aspect, the first slave device can receive the first indication information from the master device, to indicate the first slave device to report the rate scale factor, where the rate scale factor is the adjustment coefficient of the first rate (namely, an attribute value of a CIR attribute/PIR attribute). The first slave device reports the rate scale factor of the first slave device after receiving the first indication information. The master device can determine an effective CIR/PIR of the first slave device with reference to the rate scale factor and the first rate, to provide the effective CIR/PIR of the first slave device for the master device. In other words, a value of the CIR/PIR used when the first slave device operates is expanded without changing the existing attribute, and a problem of reporting a CIR/PIR of a 50G PON and a future PON with a higher rate is resolved.

In a possible implementation, a default value of the rate scale factor is 1.

In a possible implementation, a value of the rate scale factor is an integer greater than 0.

In a possible implementation, the rate scale factor and the first rate are used to determine a second rate of the first slave device, and the second rate is an effective CIR and/or an effective PIR of the first slave device.

In a possible implementation, the second rate is equal to a product of the first rate and the rate scale factor.

In a possible implementation, the second message further includes identification information of a traffic descriptor managed entity, and the third message further includes the identification information of the traffic descriptor managed entity.

In a possible implementation, when the first indication information only indicates the first slave device to report the rate scale factor, the first indication information is a first attribute mask, and a bit corresponding to a rate scale factor attribute in the first attribute mask is 1, indicating that the first slave device is requested to report an attribute value of the rate scale factor attribute. Optionally, the rate scale factor attribute corresponds to a 9^{th} bit in the first attribute mask.

In this implementation, the first attribute mask only indicates to report the attribute value of the rate scale factor attribute, and the attribute value of the rate scale factor attribute is not necessarily reported together with the attribute value of the CIR attribute or the attribute value of the PIR attribute. This helps improve flexibility of reporting an attribute value by a slave device.

In another possible implementation, the first indication information further indicates the first slave device to report the first rate, in other words, the first indication information indicates the first slave device to report the rate scale factor and the first rate. In this case, in addition to the rate scale factor, the third message further includes the first rate. When the first indication information indicates the first slave device to report the rate scale factor and the first rate, the first indication information is a first attribute mask, and a bit corresponding to a rate scale factor attribute in the first attribute mask is 1. In addition, a bit corresponding to the CIR attribute in the first attribute mask is 1, and/or a bit corresponding to the PIR attribute in the first attribute mask is 1. Optionally, the rate scale factor attribute corresponds to a 9^{th} bit in the first attribute mask.

In this implementation, the first attribute mask indicates to report the attribute value of the rate scale factor, and the attribute value of the CIR attribute and/or the attribute value of the PIR attribute, and the first slave device can feed back the rate scale factor (namely, the attribute value of the rate scale factor) and the first rate (namely, the attribute value of the CIR attribute and/or the attribute value of the PIR attribute) via the third message. This helps improve efficiency of obtaining the attribute value by the master device, and avoid wasting signaling overheads due to a plurality of times of reporting.

In a possible implementation, a message type of the second message is a get request, an identification information field of a managed entity of the second message includes the identification information of the traffic descriptor managed entity, and a message contents field of the second message includes the first attribute mask.

In a possible implementation, a message type of the third message is a get response, an identification information field of a managed entity of the third message includes the identification information of the traffic descriptor managed entity, and a message contents field of the third message includes the first attribute mask and the attribute value of the rate scale factor attribute. Optionally, the message contents field of the third message further includes the attribute value of the CIR attribute and/or the attribute value of the PIR attribute.

In a possible implementation, the second message is encapsulated in a payload field of a downstream XGEM frame, and an XGEM port identifier in a frame header of the downstream XGEM frame is the same as identification information of the first slave device. The third message is encapsulated in a payload field of an upstream XGEM frame, and an XGEM port identifier in a frame header of the upstream XGEM frame is the same as the identification information of the first slave device.

In a possible implementation, the master device is an optical line termination OLT, and the slave device is an optical network unit ONU.

It should be noted that there are further a plurality of other specific implementations in this aspect. For details, refer to the specific implementations of the first aspect and beneficial effects thereof. Details are not described herein again.

According to a fourth aspect, this application provides an optical network communication method, applied to an optical network, where the optical network includes a master device and at least one slave device, and the at least one slave device includes a first slave device. The optical network communication method provided in this aspect may be performed by the master device in the optical network, or may be performed by a part of functional modules or a chip in the master device. An example in which the master device performs the method is used. The master device sends a second message to the first slave device, where the second message includes first indication information, the first indication information indicates the first slave device to report a first rate and a rate scale factor, the rate scale factor is an adjustment coefficient of the first rate, and the first rate is a committed information rate CIR and/or a peak information rate PIR. Then, the master device receives a third message from the first slave device, where the third message includes the rate scale factor and the first rate of the first slave device.

In a possible implementation, a default value of the rate scale factor is 1.

In a possible implementation, a value of the rate scale factor is an integer greater than 0.

In a possible implementation, the rate scale factor and the first rate are used to determine a second rate of the first slave device, and the second rate is an effective CIR and/or an effective PIR of the first slave device.

In a possible implementation, the second rate is equal to a product of the first rate and the rate scale factor.

In a possible implementation, the second message further includes identification information of a traffic descriptor managed entity, and the third message further includes the identification information of the traffic descriptor managed entity.

In a possible implementation, when the first indication information only indicates the first slave device to report the rate scale factor, the first indication information is a first attribute mask, and a bit corresponding to a rate scale factor attribute in the first attribute mask is 1, indicating that the first slave device is requested to report an attribute value of the rate scale factor attribute. Optionally, the rate scale factor attribute corresponds to a 9^{th} bit in the first attribute mask.

In another possible implementation, the first indication information further indicates the first slave device to report the first rate, in other words, the first indication information indicates the first slave device to report the rate scale factor and the first rate. In this case, in addition to the rate scale factor, the third message further includes the first rate. When the first indication information indicates the first slave device to report the rate scale factor and the first rate, the first indication information is a first attribute mask, and a bit corresponding to a rate scale factor attribute in the first attribute mask is 1. In addition, a bit corresponding to a CIR attribute in the first attribute mask is 1, and/or a bit corresponding to a PIR attribute in the first attribute mask is 1. Optionally, the rate scale factor attribute corresponds to a 9^{th} bit in the first attribute mask.

In a possible implementation, a message type of the second message is a get request, an identification information field of a managed entity of the second message includes the identification information of the traffic descriptor managed entity, and a message contents field of the second message includes the first attribute mask.

In a possible implementation, a message type of the third message is a get response, an identification information field of a managed entity of the third message includes the identification information of the traffic descriptor managed entity, and a message contents field of the third message includes the first attribute mask and the attribute value of the rate scale factor attribute. Optionally, the message contents field of the third message further includes the attribute value of the CIR attribute and/or the attribute value of the PIR attribute.

In a possible implementation, the second message is encapsulated in a payload field of a downstream XGEM frame, and an XGEM port identifier in a frame header of the downstream XGEM frame is the same as identification information of the first slave device. The third message is encapsulated in a payload field of an upstream XGEM frame, and an XGEM port identifier in a frame header of the upstream XGEM frame is the same as the identification information of the first slave device.

In a possible implementation, the master device is an optical line termination OLT, and the slave device is an optical network unit ONU.

It should be noted that there are further a plurality of other specific implementations in this aspect. For details, refer to the specific implementations of the third aspect and beneficial effects thereof. Details are not described herein again.

According to a fifth aspect, this application provides an optical network communication method, applied to an optical network, where the optical network includes a master device and at least one slave device, and the at least one slave device includes a first slave device. The optical network communication method provided in this aspect may be performed by the first slave device in the optical network, or may be performed by a part of functional modules or a chip in the first slave device. An example in which the first slave device performs the method is used. The first slave device receives a fourth message from the master device, where the fourth message includes a third rate, the third rate is a committed information rate CIR and/or a peak information rate PIR, and a unit of the third rate is related to a line bit rate of the first slave device and a preset threshold. Then, the first slave device determines the unit of the third rate based on the line bit rate of the first slave device and the preset threshold.

In this aspect, the unit of the third rate received by the first slave device from the master device is related to the line bit rate of the first slave device and the preset threshold, and the first slave device can determine the unit of the third rate based on the line bit rate of the first slave device and the preset threshold. Therefore, even if a value of the third rate is limited, the first slave device can determine the unit of the third rate based on the line bit rate of the first slave device and the preset threshold, to further determine an effective CIR/PIR of the first slave device. In this way, a CIR/PIR configuration problem of a 50G PON and a future PON with a higher rate is resolved.

In a possible implementation, when the line bit rate of the first slave device is less than or equal to the preset threshold, the unit of the third rate is bytes per second; or when the line bit rate of the first slave device is greater than the preset threshold, the unit of the third rate is N bytes per second, where N is an integer greater than 0.

In a possible implementation, a default value of N is 1.

In a possible implementation, the preset threshold is 9.95328 Gbit/s.

In a possible implementation, the fourth message further includes identification information of a traffic descriptor managed entity.

In a possible implementation, a message type of the fourth message is a set request or a create request, an identification information field of a managed entity of the fourth message includes the identification information of the traffic descriptor managed entity, and a message contents field of the fourth message includes an attribute value of a CIR attribute and/or an attribute value of a PIR attribute.

In a possible implementation, when the line bit rate of the first slave device is greater than the preset threshold, an effective CIR of the first slave device is equal to a product of the attribute value of the CIR attribute and N, and a unit of the effective CIR of the first slave device is bytes per second. When the line bit rate of the first slave device is greater than the preset threshold, an effective PIR of the first slave device is equal to a product of the attribute value of the PIR attribute and N, and a unit of the effective PIR of the first slave device is bytes per second.

In a possible implementation, the fourth message is encapsulated in a payload field of a downstream XGEM frame, and an XGEM port identifier in a frame header of the downstream XGEM frame is the same as identification information of the first slave device.

In a possible implementation, the master device is an optical line termination OLT, and the slave device is an optical network unit ONU.

According to a sixth aspect, this application provides an optical network communication method, applied to an optical network, where the optical network includes a master device and at least one slave device, and the at least one slave device includes a first slave device. The optical network communication method provided in this aspect may be performed by the master device in the optical network, or may be performed by a part of functional modules or a chip in the master device. An example in which the master device performs the method is used. The master device sends a fourth message to the first slave device, where the fourth message includes a third rate, the third rate is a committed information rate CIR and/or a peak information rate PIR, a unit of the third rate is related to a line bit rate of the first slave device and a preset threshold, and the line bit rate of the first slave device and the preset threshold are used to determine the unit of the third rate.

In a possible implementation, when the line bit rate of the first slave device is less than or equal to the preset threshold, the unit of the third rate is bytes per second; or when the line bit rate of the first slave device is greater than the preset threshold, the unit of the third rate is N bytes per second, where N is an integer greater than 0.

In a possible implementation, a default value of N is 1.

In a possible implementation, the preset threshold is 9.95328 Gbit/s.

In a possible implementation, the fourth message further includes identification information of a traffic descriptor managed entity.

In a possible implementation, a message type of the fourth message is a set request or a create request, an identification information field of a managed entity of the fourth message includes the identification information of the traffic descriptor managed entity, and a message contents field of the fourth message includes an attribute value of a CIR attribute and/or an attribute value of a PIR attribute.

In a possible implementation, when the line bit rate of the first slave device is greater than the preset threshold, an effective CIR of the first slave device is equal to a product of the attribute value of the CIR attribute and N, and a unit of the effective CIR of the first slave device is bytes per second. When the line bit rate of the first slave device is greater than the preset threshold, an effective PIR of the first slave device is equal to a product of the attribute value of the PIR attribute and N, and a unit of the effective PIR of the first slave device is bytes per second.

In a possible implementation, the fourth message is encapsulated in a payload field of a downstream XGEM frame, and an XGEM port identifier in a frame header of the downstream XGEM frame is the same as identification information of the first slave device.

In a possible implementation, the master device is an optical line termination OLT, and the slave device is an optical network unit ONU.

It should be noted that there are further a plurality of other specific implementations in this aspect. For details, refer to the specific implementations of the fifth aspect and beneficial effects thereof. Details are not described herein again.

According to a seventh aspect, this application provides an optical network communication method, applied to an optical network, where the optical network includes a master device and at least one slave device, and the at least one slave device includes a first slave device. The optical network communication method provided in this aspect may be performed by the first slave device in the optical network, or may be performed by a part of functional modules or a chip in the first slave device. An example in which the first slave device performs the method is used. The first slave device receives a fifth message from the master device, where the fifth message includes second indication information, the second indication information indicates the first slave device to report a third rate, the third rate is a committed information rate CIR and/or a peak information rate PIR, and a unit of the third rate is related to a line bit rate of the first slave device and a preset threshold. Then, the first slave device sends a sixth message to the master device, where the sixth message includes the third rate of the first slave device.

In this aspect, the first slave device can receive the second indication information from the master device, to indicate the first slave device to report the third rate (namely, an attribute value of a CIR attribute/PIR attribute). Because the unit of the third rate is related to the line bit rate of the first slave device and the preset threshold, the first slave device reports the attribute value of the CIR attribute/PIR attribute after receiving the second indication information, and the master device determines an effective CIR/PIR of the first slave device. In this way, the effective CIR/PIR of the first slave device is indirectly provided for the master device. In other words, a value of the CIR/PIR used when the first slave device operates is expanded without changing the existing attribute, and a problem of reporting a CIR/PIR of a 50G PON and a future PON with a higher rate is resolved.

In a possible implementation, when the line bit rate of the first slave device is less than or equal to the preset threshold, the unit of the third rate is bytes per second; or when the line bit rate of the first slave device is greater than the preset threshold, the unit of the third rate is N bytes per second, where N is an integer greater than 0.

In a possible implementation, a default value of N is 1.

In a possible implementation, the preset threshold is 9.95328 Gbit/s.

In a possible implementation, the fifth message further includes identification information of a traffic descriptor managed entity, and the sixth message further includes the identification information of the traffic descriptor managed entity.

In a possible implementation, the second indication information is a second attribute mask, a bit corresponding to the CIR attribute in the second attribute mask is 1, and a bit corresponding to the PIR attribute in the second attribute mask is 1.

In a possible implementation, a message type of the fifth message is a get request, an identification information field of a managed entity of the fifth message includes the identification information of the traffic descriptor managed entity, and a message contents field of the fifth message includes the second indication information.

In a possible implementation, a message type of the sixth message is a get response, an identification information field of a managed entity of the sixth message includes the identification information of the traffic descriptor managed entity, and a message contents field of the sixth message includes the second indication information, the attribute value of the CIR attribute, and the attribute value of the PIR attribute.

In a possible implementation, when the line bit rate of the first slave device is greater than the preset threshold, the effective CIR of the first slave device is equal to a product of the attribute value of the CIR attribute and N, and a unit of the effective CIR of the first slave device is bytes per second. When the line bit rate of the first slave device is greater than the preset threshold, the effective PIR of the first slave device is equal to a product of the attribute value of the PIR attribute and N, and a unit of the effective PIR of the first slave device is bytes per second.

In a possible implementation, the fifth message is encapsulated in a payload field of a downstream XGEM frame, and an XGEM port identifier in a frame header of the downstream XGEM frame is the same as identification information of the first slave device. The sixth message is encapsulated in a payload field of an upstream XGEM frame, and an XGEM port identifier in a frame header of the upstream XGEM frame is the same as the identification information of the first slave device.

In a possible implementation, the master device is an optical line termination OLT, and the slave device is an optical network unit ONU.

According to an eighth aspect, this application provides an optical network communication method, applied to an optical network, where the optical network includes a master device and at least one slave device, and the at least one slave device includes a first slave device. The optical network communication method provided in this aspect may be performed by the master device in the optical network, or may be performed by a part of functional modules or a chip in the master device. An example in which the master device performs the method is used. The master device sends a fifth message to the first slave device, where the fifth message includes second indication information, the second indication information indicates the first slave device to report a third rate, the third rate is a committed information rate CIR and/or a peak information rate PIR, and a unit of the third rate is related to a line bit rate of the first slave device and a preset threshold. Then, the master device receives a sixth message from the first slave device, where the sixth message includes the third rate of the first slave device.

In this aspect, the master device can indicate, via the second indication information, the first slave device to report the third rate (namely, an attribute value of a CIR attribute/PIR attribute). Because the unit of the third rate is related to the line bit rate of the first slave device and the preset threshold, the first slave device reports the attribute value of the CIR attribute/PIR attribute after receiving the second indication information, and the master device determines an effective CIR/PIR of the first slave device. In this way, the effective CIR/PIR of the first slave device is indirectly provided for the master device. In other words, a value of the CIR/PIR used when the first slave device operates is expanded without changing the existing attribute, and a problem of reporting a CIR/PIR of a 50G PON and a future PON with a higher rate is resolved.

In a possible implementation, when the line bit rate of the first slave device is less than or equal to the preset threshold, the unit of the third rate is bytes per second; or when the line bit rate of the first slave device is greater than the preset threshold, the unit of the third rate is N bytes per second, where N is an integer greater than 0.

In a possible implementation, a default value of N is 1.

In a possible implementation, the preset threshold is 9.95328 Gbit/s.

In a possible implementation, the fifth message further includes identification information of a traffic descriptor managed entity, and the sixth message further includes the identification information of the traffic descriptor managed entity.

In a possible implementation, the second indication information is a second attribute mask, a bit corresponding to the CIR attribute in the second attribute mask is 1, and a bit corresponding to the PIR attribute in the second attribute mask is 1.

In a possible implementation, a message type of the fifth message is a get request, an identification information field of a managed entity of the fifth message includes the identification information of the traffic descriptor managed entity, and a message contents field of the fifth message includes the second indication information.

In a possible implementation, a message type of the sixth message is a get response, an identification information field of a managed entity of the sixth message includes the identification information of the traffic descriptor managed entity, and a message contents field of the sixth message includes the second indication information, the attribute value of the CIR attribute, and the attribute value of the PIR attribute.

In a possible implementation, when the line bit rate of the first slave device is greater than the preset threshold, the effective CIR of the first slave device is equal to a product of the attribute value of the CIR attribute and N, and a unit of the effective CIR of the first slave device is bytes per second. When the line bit rate of the first slave device is greater than the preset threshold, the effective PIR of the first slave device is equal to a product of the attribute value of the PIR attribute and N, and a unit of the effective PIR of the first slave device is bytes per second.

In a possible implementation, the fifth message is encapsulated in a payload field of a downstream XGEM frame, and an XGEM port identifier in a frame header of the downstream XGEM frame is the same as identification information of the first slave device. The sixth message is encapsulated in a payload field of an upstream XGEM frame, and an XGEM port identifier in a frame header of the upstream XGEM frame is the same as the identification information of the first slave device.

In a possible implementation, the master device is an optical line termination OLT, and the slave device is an optical network unit ONU.

It should be noted that there are further a plurality of other specific implementations in this aspect. For details, refer to the specific implementations of the seventh aspect and beneficial effects thereof. Details are not described herein again.

According to a ninth aspect, an embodiment of this application provides a communication apparatus. The communication apparatus may be the master device in the foregoing implementations, or may be a chip in the master device. The communication apparatus may include a processing module and a transceiver module. When the communication apparatus is the master device, the processing module may be a processor, and the transceiver module may be a transceiver. The master device may further include a storage module, and the storage module may be a memory. The storage module is configured to store instructions, and the processing module executes the instructions stored in the storage module, so that the master device performs the method in any one of the second aspect, the fourth aspect, the sixth aspect, the eighth aspect, and the implementations of the foregoing aspects. When the communication apparatus is the chip in the master device, the processing module may be a processor, and the transceiver module may be an input/output interface, a pin, a circuit, or the like. The processing module executes instructions stored in a storage module, so that the master device performs the method in any one of the second aspect, the fourth aspect, the sixth aspect, the eighth aspect, and the implementations of the foregoing aspects. The storage module may be a storage module (for example, a register or a cache) in the chip, or may be a storage module (for example, a read-only memory or a random access memory) that is in the master device and that is located outside the chip.

According to a tenth aspect, an embodiment of this application provides a communication apparatus. The communication apparatus may be the slave device (for example, the first slave device) in the foregoing implementations, or may be a chip in the slave device (for example, the first slave device). The communication apparatus may include a processing module and a transceiver module. When the communication apparatus is the slave device (for example, the first slave device), the processing module may be a processor, and the transceiver module may be a transceiver. Optionally, the slave device (for example, the first slave device) may further include a storage module. The storage module may be a memory. The storage module is configured to store instructions, and the processing module executes the instructions stored in the storage module, so that the slave device (for example, the first slave device) performs the method in any one of the first aspect, the third aspect, the fifth aspect, the seventh aspect, and the implementations of the foregoing aspects. When the communication apparatus is the chip in the slave device (for example, the first slave device), the processing module may be a processor, and the transceiver module may be an input/output interface, a pin, a circuit, or the like. The processing module executes instructions stored in a storage module, so that the slave device (for example, the first slave device) performs the method in any one of the first aspect, the third aspect, the fifth aspect, the seventh aspect, and the implementations of the foregoing aspects. The storage module may be a storage module (for example, a register or a cache) in the chip, or may be a storage module (for example, a read-only memory or a random access memory) that is in the slave device (for example, the first slave device) and that is located outside the chip.

According to an eleventh aspect, this application provides a communication apparatus. The communication apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method described in any one of the implementations of the foregoing aspects.

According to a twelfth aspect, an embodiment of this application provides a computer program product including instructions. When the instructions are run on a computer, the computer is enabled to perform the method described in any one of the implementations of the foregoing aspects.

According to a thirteenth aspect, an embodiment of this application provides a computer-readable storage medium, including instructions. When the instructions are run on a computer, the computer is enabled to perform the method described in any one of the implementations of the foregoing aspects.

According to a fourteenth aspect, an embodiment of this application provides an optical network. The optical network includes the master device described in any one of the second aspect and the implementations of the second aspect, and the slave device (for example, the first slave device) described in any one of the first aspect and the implementations of the first aspect. Alternatively, the optical network includes the master device described in any one of the fourth aspect and the implementations of the fourth aspect, and the slave device (for example, the first slave device) described in any one of the third aspect and the implementations of the third aspect. Alternatively, the optical network includes the master device described in any one of the sixth aspect and the implementations of the sixth aspect, and the slave device (for example, the first slave device) described in any one of the fifth aspect and the implementations of the fifth aspect. Alternatively, the optical network includes the master device described in any one of the eighth aspect and the implementations of the eighth aspect, and the slave device (for example, the first slave device) described in any one of the seventh aspect and the implementations of the seventh aspect.

### BRIEF DESCRIPTION OF DRAWINGS

FIG. 1A is an example diagram of a network architecture of an optical network;
FIG. 1B is another example diagram of a network architecture of an optical network;
FIG. 2 is a schematic flowchart of an optical network communication method according to this application;
FIG. 3A is an example diagram of a message format of a create request message according to this application;
FIG. 3B is an example diagram of a message format of a conventional create request message;
FIG. 3C is an example diagram of a message format of a set request message according to this application;
FIG. 3D is an example diagram of a message format of a conventional set request message;
FIG. 4 is another schematic flowchart of an optical network communication method according to this application;
FIG. 5A is an example diagram of a message format of a get request message according to this application;
FIG. 5B is an example diagram of a message format of a conventional get request message;
FIG. 5C is an example diagram of a message format of a get response message according to this application;
FIG. 5D is an example diagram of a message format of a conventional get response message;
FIG. 6 is another schematic flowchart of an optical network communication method according to this application;
FIG. 7 is another schematic flowchart of an optical network communication method according to this application;
FIG. 8 is a diagram of an embodiment of a communication apparatus according to this application; and
FIG. 9 is a diagram of another embodiment of a communication apparatus according to this application.

### DESCRIPTION OF EMBODIMENTS

The following clearly and completely describes technical solutions in embodiments of this application with reference to accompanying drawings in embodiments of this application. It is clear that the described embodiments are merely some but not all of embodiments of this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In the specification, claims, and accompanying drawings of this application, the terms "first", "second", "third", "fourth", and the like (if exists) are intended to distinguish between similar objects but do not necessarily indicate a specific order or sequence. It should be understood that the terms used in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It should be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

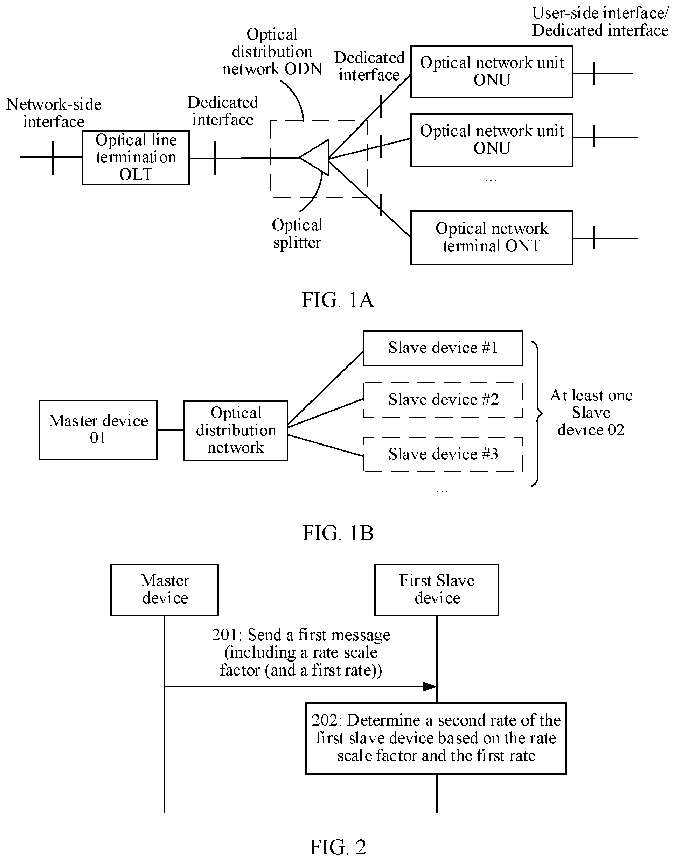

The optical network communication method provided in this application is applied to an optical network. FIG. 1A is an example diagram of an architecture of an optical network in a conventional technology. As shown in FIG. 1A, the optical network includes an optical line termination (optical line termination, OLT), an optical distribution network (optical distribution network, ODN), and an optical network unit (optical network unit, ONU) (or an optical network terminal (optical network terminal, ONT)). The OLT and the ONU are connected and communicate with each other through an optical fiber. The OLT is generally connected to the ONU (or the ONT) over the ODN. The ODN is a network including one or more optical devices such as an optical fiber, an optical distribution frame (optical distribution frame, ODF), an optical splitter (also referred to as a splitter) (splitter), and a combiner. In addition, the OLT may be connected to an operator network through a network-side interface, the OLT may be connected to the ODN through a dedicated interface, the ODN is connected to the ONU (or the ONT) through a dedicated interface, and the ONU (or the ONT) is connected to a user-side network through a user-side interface or a dedicated interface. In a downstream direction, the OLT broadcasts a downstream optical signal, and distributes the downstream optical signal to each ONU (or each ONT) over the ODN. In an upstream direction, a time division multiple access (time division multiple access, TDMA) manner is used, and each ONU (or each ONT) sends an upstream optical signal in a respective upstream timeslot distributed by the OLT.

FIG. 1B is a diagram of a structure of an optical network according to this application. The optical network provided in this application includes a master device 01 and at least one slave device 02. The master device 01 is connected to the at least one slave device 02 through an optical fiber. The master device 01 can manage one or more slave devices 02 based on an OMCI protocol. It should be understood that the master device may be an OLT, the slave device may be an ONU (or an ONT), and the master device is connected to the at least one slave device over an optical distribution network. In an example, the slave device may be directly connected to a terminal device of a user. The terminal device may be a mobile phone or a tablet computer that is connected to the slave device over Wi-Fi, or may be an internet of things device (for example, an indoor temperature control device, an indoor monitoring device, or another artificial intelligence device). In another example, another network (for example, Ethernet) exists between the slave device and a terminal device of a user. The slave device is an optical modem or the like provided by an operator, and the optical modem is connected to a device like an indoor router. This application provides descriptions by using a master device and a slave device as an example.

It should be understood that a specific type of an optical fiber is not limited in this application. The optical fiber in this application may be a single optical fiber, a loose tube optical fiber, an optical cable, a power over fiber cable, or the like.

It should be further understood that the optical network communication method provided in this application may be applied to PON networks, for example, a gigabit-capable passive optical network (Gigabit-capable Passive Optical Networks, GPON), a 10-gigabit-capable passive optical network (10-Gigabit-capable Passive Optical Networks, XG-PON), a 10-gigabit-capable symmetric passive optical network (10-Gigabit-capable Symmetric Passive Optical Networks, XGS-PON), a 50-gigabit-capable passive optical network (50-Gigabit-capable Passive Optical Networks, 50 GPON), and a future PON system with a higher rate. This is not limited in this application.

For ease of understanding of the optical network communication method provided in this application, the following first describes an OMCI protocol and a management model defined in the OMCI protocol.

The OMCI protocol is a master-slave management protocol, and a master device (for example, an OLT) delivers a command, and waits for a slave device (for example, an ONU) to return a response after executing the foregoing command. In the OMCI protocol, various resources and services of the slave device that are managed by the master device are abstracted into a protocol-independent management information base (protocol-independent management information base, MIB). A basic information unit of the management information base is a managed entity (also referred to as an entity that is managed) (managed entity, ME). The managed entity is an abstract representation of a resource and/or a service of the slave device, and is a managed object abstracted from a plurality of to-be-managed resources and/or a plurality of to-be-managed services. When the managed entity is specific to a specific slave device or a specific service, the managed entity becomes an instance. The master device implements a configuration management function of each managed entity ME by configuring an instance for the slave device.

This application mainly relates to a traffic descriptor (Traffic descriptor) managed entity (referred to as a traffic descriptor ME for short in the following). The traffic descriptor ME is used to perform traffic management on the slave device. For example, a slave device supporting priority control may configure, from a medium access control (media access control, MAC) bridging port, a data managed entity pointing to the traffic descriptor managed entity, to implement traffic management such as traffic marking and traffic policing. For another example, a slave device supporting rate control may configure, from a MAC bridging port, a data managed entity or a GEM port network connection termination point (Connection Termination Point, CTP) managed entity pointing to the traffic descriptor managed entity, to implement traffic management such as traffic marking and traffic shaping.

In a current standard, the traffic descriptor ME includes a plurality of attributes shown in Table 1 below.

**Table 1**

| Attribute sequence | Attribute | Whether readable and writable | Whether optional | Attribute size |
|---|---|---|---|---|
| 1 | Managed entity identifier | Readable | Mandatory | 2 bytes |
| 2 | Committed information rate CIR | Readable, writable, and set-by-create | Optional | 4 bytes |
| 3 | Peak information rate PIR | Readable, writable, and set-by-create | Optional | 4 bytes |
| 4 | Committed burst size | Readable, writable, and set-by-create | Optional | 4 bytes |
| 5 | Peak burst size | Readable, writable, and set-by-create | Optional | 4 bytes |
| 6 | Color mode | Readable, writable, and set-by-create | Optional | 1 byte |
| 7 | Ingress color marking | Readable, writable, and set-by-create | Optional | 1 byte |
| 8 | Egress color marking | Readable, writable, and set-by-create | Optional | 1 byte |
| 9 | Algorithm type | Readable, and set-by-create | Optional | 1 byte |

As shown in Table 1, a 1^{st} column indicates a sequence of the plurality of attributes included in the traffic descriptor ME. When the master device configures the plurality of attributes of the traffic descriptor ME for the slave device, or when the master device obtains the plurality of attributes of the traffic descriptor ME from the slave device, attribute values or attribute masks are filled in based on the sequence of the foregoing attributes. A 2^{nd} column is names of the plurality of attributes included in the traffic descriptor ME. A 3^{rd} column indicates whether a read (Read) operation or a write (Write) operation can be performed on the attribute by the master device and when to set the attribute. The read operation may be understood as that the master device reads an attribute value of the attribute by sending a get (get) message to the slave device and receiving a get response (get response) message from the slave device. The write operation may be understood as that the master device configures an attribute value of the attribute by sending a create (create) message or a set (set) message to the slave device. "Set-by-create (set-by-create)" indicates that an attribute value of the attribute is set when the master device creates an instance of the ME the first time. A 4^{th} column indicates specific attributes that are mandatorily set and specific attributes that are optionally set in the plurality of attributes of the traffic descriptor ME. A 5^{th} column indicates a byte size occupied by an attribute value of each attribute.

This application mainly relates to first three attributes of the traffic descriptor ME. As shown in Table 1, a 1^{st} row is a 1^{st} attribute of the traffic descriptor ME, namely, a managed entity identifier (Managed entity ID, ME ID) attribute, and the attribute uniquely identifies the instance of the traffic descriptor ME. The ME ID attribute is a readable attribute, is a mandatory attribute, and is with a size of 2 bytes. A 2^{nd} row is a 2^{nd} attribute of the traffic descriptor ME, namely, a committed information rate (committed information rate, CIR) attribute. The CIR attribute specifies the committed information rate, with a unit of bytes per second (byte/s). A default value of the committed information rate is 0. The CIR attribute is set when the instance is created, is a readable and writable attribute, is an optional attribute, and is with a size of 4 bytes. A 3^{rd} row is a 3^{rd} attribute of the traffic descriptor ME, namely, a peak information rate (peak information rate, PIR) attribute. The PIR attribute specifies the peak information rate, with a unit of bytes per second (byte/s). A default value of the peak information rate is 0. The PIR attribute is set when the instance is created, is a readable and writable attribute, is an optional attribute, and is with a size of 4 bytes.

Because lengths of a CIR attribute field and a PIR attribute field are both 4 bytes (bytes), and units of the CIR attribute and the PIR attribute are both bytes per second (byte/s), maximum values of the CIR attribute and the PIR attribute are separately 4,294,967,295 (that is, 2³²-1). In other words, a maximum CIR or a maximum PIR that can be configured based on the two attributes is 4,294,967,295 bytes/s, and is approximately 34 Gbit/s. In other words, based on the current standard, the master device may configure a CIR or a PIR of only 34 Gbit/s for the slave device. However, a PON system has developed to a 50G PON, or even a future PON with a higher rate, in other words, an operating line bit rate of the slave device may reach 50 Gbit/s or even a higher line bit rate. In this way, the master device needs to configure a CIR or a PIR of 50 Gbit/s or even a higher line bit rate for the slave device. It is clear that the current field lengths of the CIR attribute and the PIR attribute in the traffic descriptor ME are not enough to support configuration of the 50G PON and the future PON with the higher rate.

In view of this, this application provides a plurality of solutions, to resolve a CIR/PIR configuration problem of the 50G PON and the future PON with the higher rate.

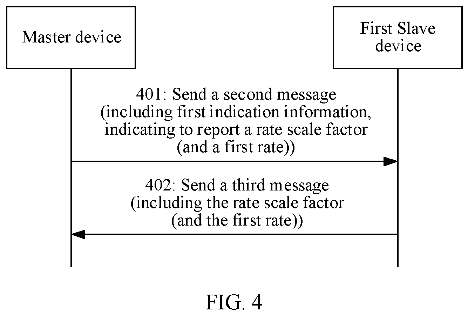

In a solution, it is proposed to define a new attribute of the traffic descriptor ME, namely, a rate scale factor attribute to be described below. The rate scale factor attribute and the CIR attribute defined in the standard are jointly used to determine an effective CIR of the slave device, and the rate scale factor attribute and the PIR attribute defined in the standard are jointly used to determine an effective PIR of the slave device. For details, refer to related descriptions in the following embodiments corresponding to FIG. 2 and FIG. 4.

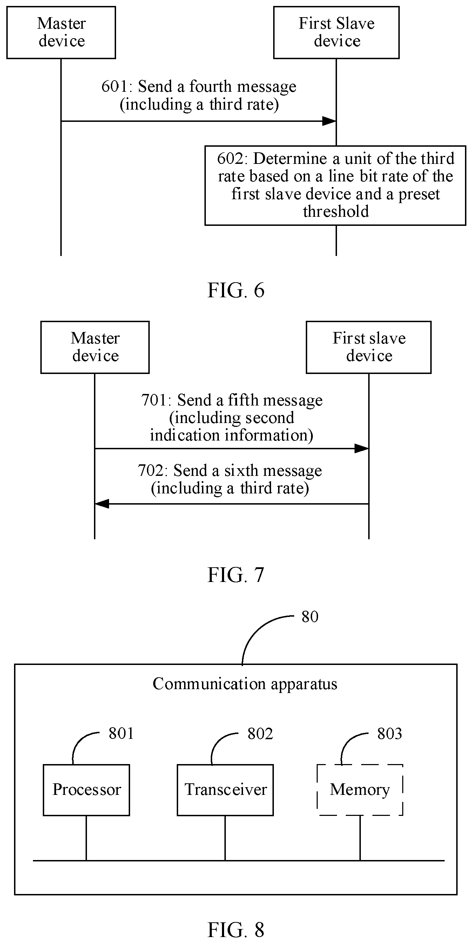

In another solution, it is proposed to modify definitions of the CIR and the PIR in the current standard, in other words, the following is defined: Units of the CIR and the PIR are related to a line bit rate of the slave device and a preset threshold, and are not necessarily bytes per second. For details, refer to related descriptions in the following embodiments corresponding to FIG. 6 and FIG. 7.

The following first describes a main procedure of a first solution of an optical network communication method according to this application with reference to FIG. 2 and FIG. 4.

FIG. 2 is a diagram of an embodiment of an optical network communication method according to this application. In this embodiment, a master device configures an attribute for a first slave device via a create (create) message or a set (set) message. The first slave device is one of a plurality of slave devices connected to the master device. In this embodiment, interaction between the master device and the first slave device is used as an example for description. It is clear that an entity that performs an action of the master device in the method may alternatively be an apparatus, a module, or a chip in the master device, and an entity that performs an action of the first slave device in the method may alternatively be an apparatus, a module, or a chip in the first slave device. This is not specifically limited in this embodiment. For example, as shown in FIG. 2, the optical network communication method includes the following steps.

Step 201: The master device sends a first message to the first slave device. Correspondingly, the first slave device receives the first message from the master device.

For example, the master device sends the first message to the first slave device through an optical fiber. Correspondingly, the first slave device receives the first message from the master device through the optical fiber. The first message includes a rate scale factor. Optionally, the first message further includes a first rate. The rate scale factor is an adjustment coefficient of the first rate.

The first rate is a CIR and/or a PIR. For example, the first rate is the CIR; the first rate is the PIR; or the first rate is the CIR and the PIR. In an implementation, the first rate may be a CIR value and/or a PIR value indicated by the master device to the first slave device via a CIR field and/or a PIR field in a current standard. For example, before the master device sends the first message to the first slave device, the master device sends a seventh message to the first slave device, where the seventh message includes the first rate. In another implementation, the first rate may be a CIR value and/or a PIR value indicated by the master device to the first slave device via a CIR field and/or a PIR field of the first message. For example, the first message includes the rate scale factor, and further includes the first rate. In another implementation, the first rate is a preconfigured CIR and/or a preconfigured PIR, or a default CIR and/or a default PIR. For example, the standard defines a CIR value and/or a PIR value used by the first slave device by default when the master device does not configure the CIR and/or the PIR for the first slave device. For ease of description, an example in which the first rate is carried in the first message is used below for description. It should be understood that, in the following, a "CIR carried in the first message" may be replaced with a "CIR carried in the seventh message" or the "default CIR", and a "PIR carried in the first message" may be replaced with a "PIR carried in the seventh message" or the "default PIR".

The rate scale factor is the adjustment coefficient of the first rate, in other words, the rate scale factor is an adjustment coefficient of the CIR carried in the first message and/or an adjustment coefficient of the PIR carried in the first message. It may be understood that the rate scale factor and the first rate are used to determine a second rate, and the second rate is an effective CIR (effective CIR) and/or an effective PIR (effective PIR) of the first slave device. The effective CIR (effective CIR) of the first slave device may be understood as an effective CIR (effective CIR) of the first slave device, or may be understood as a CIR used when the first slave device operates. The effective PIR (effective PIR) of the first slave device may be understood as an effective PIR (effective PIR) of the first slave device, or may be understood as a PIR used when the first slave device operates.

Optionally, a product of the rate scale factor and the first rate is equal to the second rate. For example, a product of the rate scale factor and the CIR carried in the first message is equal to the effective CIR of the first slave device (namely, the CIR used when the first slave device operates). For another example, a product of the rate scale factor and the PIR carried in the first message is equal to the effective PIR of the first slave device (namely, the PIR used when the first slave device operates).

Optionally, a value of the rate scale factor is an integer greater than 0. For example, if the value of the rate scale factor is 1, the second rate is equal to the first rate, in other words, the first slave device operates based on the CIR value and/or the PIR value that are/is indicated by the first message. If the value of the rate scale factor is greater than 1, for example, the value of the rate scale factor is a (where a is an integer greater than 1), the second rate is equal to a times the first rate, in other words, the first slave device operates based on a times the CIR value indicated by the first message and/or a times the PIR value indicated by the first message. It can be learned that, when the first message carries the rate scale factor, the master device may indicate an integer multiple of the CIR value and/or an integer multiple of the PIR value to the first slave device, so that the effective CIR and/or the effective PIR of the first slave device can be not limited to a maximum rate that can be indicated by four bytes. Therefore, a CIR/PIR configuration problem of a 50G PON and a future PON with a higher rate is resolved.

It should be noted that, in the current standard and a future standard development trend, because the master device manages and maintains a CIR and a PIR of a slave device via a CIR attribute and a PIR attribute of a traffic descriptor ME, that the first message includes the first rate may be understood as that the first message carries an attribute value of the CIR attribute and/or an attribute value of the PIR attribute. In addition, the rate scale factor is a newly defined attribute of the traffic descriptor ME in this application, namely, a rate scale factor attribute. That the first message includes the rate scale factor may be understood as that the first message carries an attribute value of the rate scale factor attribute.

Optionally, the rate scale factor attribute occupies at least one byte. The attribute value of the rate scale factor attribute is an integer greater than 0. For example, if the rate scale factor attribute occupies one byte, a maximum value of the attribute value of the rate scale factor attribute is 2⁸ (namely, 256), indicating that a maximum value of the CIR (or the PIR) used when the first slave device operates may be 256 times the attribute value of the CIR attribute (or the attribute value of the PIR attribute) carried in the first message. For another example, if the rate scale factor attribute occupies two bytes, a maximum value of the attribute value of the rate scale factor attribute is 2¹⁶ (namely, 65536), indicating that a maximum value of the CIR (or the PIR) used when the first slave device operates may be 65536 times the attribute value of the CIR attribute (or the attribute value of the PIR attribute) carried in the first message.

For example, attributes included in the traffic descriptor ME provided in this application are shown in Table 2 below.

**Table 2**

| Attribute sequence | Attribute | Whether readable and writable | Whether optional | Attribute size |
|---|---|---|---|---|
| 1 | Managed entity identifier | Readable | Mandatory | 2 bytes |
| 2 | Committed information rate CIR | Readable, writable, and set-by-create | Optional | 4 bytes |
| 3 | Peak information rate PIR | Readable, writable, and set-by-create | Optional | 4 bytes |
| 4 | Committed burst size | Readable, writable, and set-by-create | Optional | 4 bytes |
| 5 | Peak burst size | Readable, writable, and set-by-create | Optional | 4 bytes |
| 6 | Color mode | Readable, writable, and set-by-create | Optional | 1 byte |
| 7 | Ingress color marking | Readable, writable, and set-by-create | Optional | 1 byte |
| 8 | Egress color marking | Readable, writable, and set-by-create | Optional | 1 byte |
| 9 | Algorithm type | Readable, and set-by-create | Optional | 1 byte |
| 10 | Rate scale factor | Readable, writable, and set-by-create | Optional | 2 bytes |

In the example shown in Table 2, this application newly defines a 10^{th} attribute of the traffic descriptor ME, namely, the rate scale factor attribute. Because the rate scale factor attribute is related to the CIR attribute or the PIR attribute, the rate scale factor may also be referred to as a CIR/PIR scale factor (CIR/PIR scale factor). The rate scale factor attribute may be defined as a readable attribute, in other words, the master device can read the attribute value of the rate scale factor attribute from a slave device (for example, the first slave device) through a get (get) procedure. The rate scale factor attribute may be defined as a writable attribute, in other words, the master device can configure the attribute value of the rate scale factor attribute for a slave device (for example, the first slave device) through a create (create) procedure or a set (set) procedure. In addition, the rate scale factor attribute is a set-by-create (set-by-create) attribute, in other words, when creating an instance of the traffic descriptor ME of the first slave device, the master device may set the attribute value of the rate scale factor attribute used by the first slave device. Optionally, the rate scale factor attribute is an attribute optionally to be configured. A default value of the rate scale factor is 1. Optionally, a size of the rate scale factor attribute is 2 bytes. Other attributes shown in Table 2 are the same as those defined in the current standard. Details are not described herein again.

It should be understood that each definition of the rate scale factor attribute shown in Table 2 is merely an example, but is not strictly limited. For example, if another new attribute of the traffic descriptor ME is introduced in the standard, the rate scale factor attribute may alternatively be an 11^{th} attribute of the traffic descriptor ME. For another example, the rate scale factor may alternatively be defined as another byte size, for example, 1 byte, 3 bytes, or 4 bytes. For ease of understanding, the following uses only the example shown in Table 2 as an example for description.

In this embodiment, the first slave device is a registered and online slave device, an OMCI management channel is established between the first slave device and the master device, and the master device can communicate with the first slave device via an OMCI message. Therefore, the first message may be an OMCI message. Generally, the OMCI message includes a create (create) procedure-related message (for example, a create (create) request message, also referred to as a create (create) message), a set (set) procedure-related message (for example, a set (set) request message, also referred to as a set (set) message), and a get (get) procedure-related message (for example, a get (get) request message, also referred to as a get (get) message). In this embodiment, the first message is a create request message or a set request message.

The following describes the first message with reference to specific message formats.

In a possible implementation, the first message is the create request message, in other words, a message type of the first message is a create request, to be specific, a message sent by the master device to the first slave device when the master device creates the instance of the traffic descriptor ME of the first slave device for the first time. An identification information field of a managed entity of the first message includes identification information of the traffic descriptor managed entity, a message contents field of the first message includes the attribute value of the rate scale factor attribute, and the message contents field of the first message further includes the attribute value of the CIR attribute and/or the attribute value of the PIR attribute.

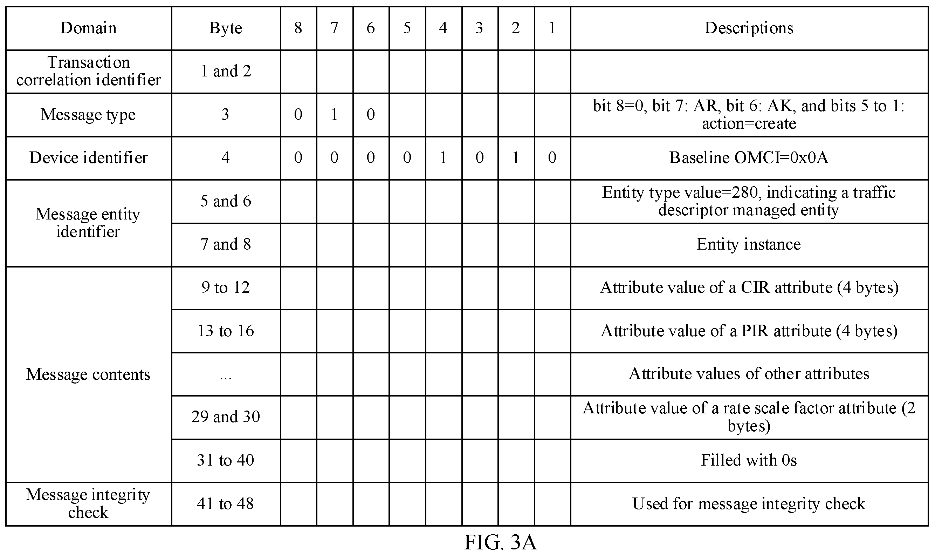

For example, FIG. 3A is an example diagram of a create request message according to this application. 1^{st} and 2^{nd} bytes are a transaction correlation identifier (transaction correlation identifier, TCI) field, and identify a request message and a response message of a same group, for example, are used to match a request message (or a command) from the master device to a slave device and a response message from the slave device to the master device. Generally, values of transaction correlation identifier fields in a group of corresponding request and response messages are consistent. A 3^{rd} byte is a message type (message type, MT) field, and indicates a purpose or an action (action) of the message, or may be understood as indicating a message type of the message. 1^{st} to 5^{th} bits of the 3^{rd} byte are message type (message type, MT) bits, and indicate a message type, for example, create (create), delete (delete), set (set), and get (get) message types. A 6^{th} bit of the 3^{rd} byte is an acknowledge (acknowledge, AK) bit, and indicates whether the message is responded. A 7^{th} bit of the 3^{rd} byte is an acknowledge request (acknowledge request, AR) bit, and indicates whether the message needs to be responded by a peer end. An 8^{th} bit of the 3^{rd} byte is a reserved bit, and is fixed to 0. The message type of the example shown in FIG. 3A is a create (create) request type. A 4^{th} byte is a device identifier (device identifier) field. For a baseline OMCI message format (Baseline OMCI message format) shown in FIG. 3A, the field is a fixed value 0x0A. 5^{th} to 8^{th} bytes are a message entity identifier (message entity identifier), including an entity class (entity class) and a corresponding entity instance (entity instance). In the example shown in FIG. 3A, the 5^{th} and 6^{th} bytes have a value of 280, and indicate the traffic descriptor managed entity, in other words, indicate an ME ID of the traffic descriptor managed entity. 9^{th} to 40^{th} bytes are a message contents (message contents) field, and are used to carry message contents, in other words, are used to encapsulate a packet payload. Last four bytes are a message integrity check (message integrity check, MIC) field, and are used for message integrity check.

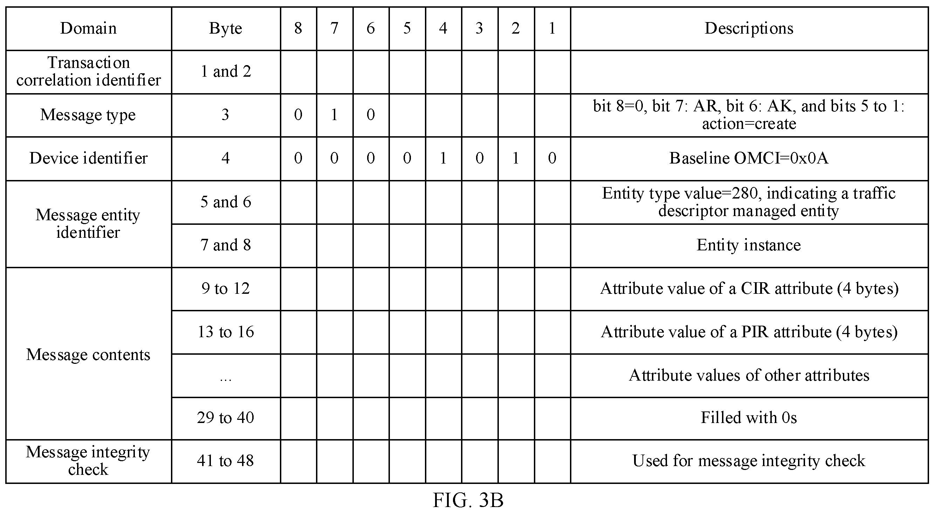

A 1^{st} byte of the message contents field of the create message begins with an attribute value of a 1^{st} set-by-create attribute, and space is allocated to each set-by-create attribute in the create message in sequence based on a size of the attribute. Therefore, with reference to Table 2 above, it can be learned that a 1^{st} attribute value in the message contents field is the attribute value of the 4-byte CIR attribute, and occupies the 9^{th} to 12^{th} bytes; a 2^{nd} attribute value in the message contents field is the attribute value of the 4-byte PIR attribute, and occupies the 13^{th} to 16^{th} bytes; and by analogy, a 9^{th} attribute value in the message contents field is the attribute value of the 2-byte rate scale factor attribute, and occupies the 29^{th} and 30^{th} bytes. Other bytes (the 31^{st} to 40^{th} bytes) of the message contents field are filled with 0s. In comparison with a create request message for configuring a CIR/PIR in a conventional technology shown in FIG. 3B, it can be learned that in the conventional technology, 29^{th} to 40^{th} bytes of a message contents field are all filled with 0s.

In another possible implementation, the first message is the set request message, in other words, a message type of the first message is a set request. For example, the master device sends the set request message to the first slave device when the instance of the traffic descriptor ME of the first slave device needs to be reconfigured. An identification information field of a managed entity of the first message includes identification information of the traffic descriptor managed entity, and a message contents field of the first message includes the attribute value of the rate scale factor attribute. Optionally, the message contents field of the first message further includes the attribute value of the CIR attribute and/or the attribute value of the PIR attribute.

In addition, the message contents field of the first message further includes an attribute mask (Attribute mask), and the attribute mask indicates attribute values of specific attributes carried in the message contents field. A size of the attribute mask is 2 bytes (namely, 16 bits). Therefore, the attribute mask indicates a maximum of 16 attributes. The attribute mask may be a bit map used in a get (get) message (namely, a get request message), a get response (get response) message, a create response (create response) message, and a set (set) message (namely, a set request message), where the bit map indicates specific attributes that are requested or provided. The attribute mask from a high-order bit to a low-order bit (in other words, from an 8^{th} bit to a 1^{st} bit) corresponds to a sequence of attributes after an ME ID in attributes of the traffic descriptor ME (namely, the sequence of the attributes after the ME ID shown in Table 2). Because the CIR attribute is a 2^{nd} attribute of the traffic descriptor entity (namely, a 1^{st} attribute after an ME ID attribute), the CIR attribute corresponds to a 1^{st} bit in the attribute mask. Because the PIR attribute is a 3^{rd} attribute of the traffic descriptor entity (namely, a 2^{nd} attribute after the ME ID attribute), the PIR attribute corresponds to a 2^{nd} bit in the attribute mask. If the message contents field carries the attribute value of the CIR attribute, the 1^{st} bit corresponding to the CIR attribute in the attribute mask is 1. If the message contents field does not carry the attribute value of the CIR attribute, the 1^{st} bit corresponding to the CIR attribute in the attribute mask is 0. Other attributes are similar. Details are not described herein.

In this application, an attribute mask indicating that the attribute value of the rate scale factor attribute is carried is referred to as a first attribute mask. A bit corresponding to the rate scale factor attribute in the first attribute mask is 1. Optionally, the bit corresponding to the CIR attribute in the first attribute mask is 1, and/or the bit corresponding to the PIR attribute in the first attribute mask is 1. Optionally, if the rate scale factor attribute is a 10^{th} attribute of the traffic descriptor entity, namely, a 9^{th} attribute after the ME ID attribute, the rate scale factor attribute corresponds to a 9^{th} bit in the first attribute mask.

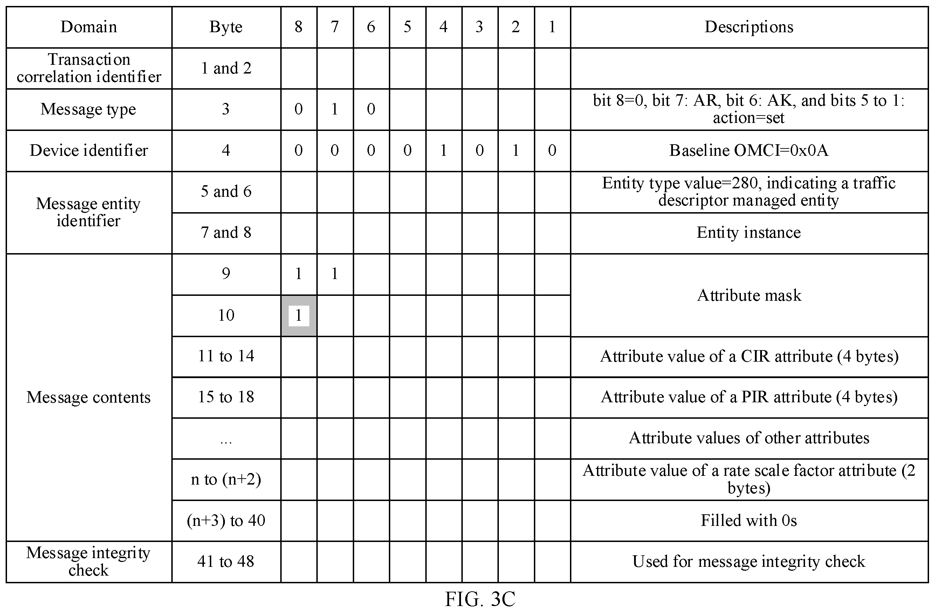

For example, FIG. 3C is an example diagram of a set request message according to this application. In comparison with the create request message shown in FIG. 3A, the set request message shown in FIG. 3C is different only in a message type field and a message contents field. For explanations of other fields, refer to related descriptions of the example shown in FIG. 3A above. Details are not described herein again. As shown in FIG. 3C, a 3^{rd} byte is a message type indicated by the message type (message type, MT) field, where the message type is a set (set) request type. 9^{th} to 40^{th} bytes are the message contents (message contents) field. The 9^{th} and 10^{th} bytes are an attribute mask (Attribute mask). The 9^{th} and 10^{th} bytes of the attribute mask from a high-order bit to a low-order bit (in other words, from an 8^{th} bit to a 1^{st} bit) correspond to the sequence of the attributes after the ME ID in attributes of the traffic descriptor ME (namely, the sequence of the attributes after the ME ID shown in Table 2). For example, an 8^{th} bit of the 9^{th} byte corresponds to the CIR attribute, a 7^{th} bit of the 9^{th} byte corresponds to the PIR attribute, and by analogy, an 8^{th} bit of the 10^{th} byte corresponds to the rate scale factor attribute. In an example, as shown in FIG. 3C, if the first message carries the attribute value of the CIR attribute, the attribute value of the PIR attribute, and the attribute value of the rate scale factor attribute, the 8^{th} bit of the 9^{th} byte is 1, indicating that the message contents field carries the attribute value of the CIR attribute; the 7^{th} bit of the 9^{th} byte is 1, indicating that the attribute value of the PIR attribute is carried; and the 8^{th} bit of the 10^{th} byte is 1, indicating that the attribute value of the rate scale factor attribute is carried. In another example, if the first message carries the attribute value of the rate scale factor attribute, the 8^{th} bit of the 9^{th} byte is 0, indicating that the message contents field does not carry the attribute value of the CIR attribute; the 7^{th} bit of the 9^{th} byte is 0, indicating the attribute value of the PIR attribute is not carried; and the 8^{th} bit of the 10^{th} byte is 1, indicating that the attribute value of the rate scale factor attribute is carried. It should be understood that, based on different types of attribute values carried in the message contents field, there may be another example of the attribute mask. Details are not described herein.

In addition, other bytes of the message contents field are used to carry attribute values of attributes indicated by the attribute mask. It should be noted that the message contents field of the set request message is different from the message contents field of the create request message. A 1^{st} byte of the message contents field of the create request message begins with an attribute value of a 1^{st} set-by-create attribute, and space is allocated to each set-by-create attribute in the create message in sequence based on a size of the attribute. However, the message contents field of the set request message carries only an attribute value of an attribute indicated by the attribute mask, and does not necessarily carry attribute values of all set-by-create attributes. Optionally, the attribute value of the rate scale factor attribute may be carried in n^{th} to (n+2)^{th} bytes of the message contents field, where n is an integer greater than or equal to 11 and less than or equal to 38.

In an example, if the set request message is used to request to configure attribute values of all attributes of the traffic descriptor ME, with reference to Table 2 above, it can be learned that the 11^{th} to 14^{th} bytes are the attribute value of the 4-byte CIR attribute, the 15^{th} to 18^{th} bytes are the attribute value of the 4-byte PIR attribute, and by analogy, the 31^{st} and 32^{nd} bytes are the attribute value of the 2-byte rate scale factor attribute, and other bytes (namely, the 33^{rd} to 40^{th} bytes) of the message contents field are filled with 0s. In another example, if the set request message is used to request to configure the CIR attribute, the PIR attribute, and the rate scale factor attribute, with reference to Table 2 above, it can be learned that the 11^{th} to 14^{th} bytes are the attribute value of the 4-byte CIR attribute, the 15^{th} to 18^{th} bytes are the attribute value of the 4-byte PIR attribute, the 19^{th} and 20^{th} bytes are the attribute value of the 2-byte rate scale factor attribute, and other bytes (namely, the 21^{st} to 40^{th} bytes) of the message contents field are filled with 0s. In another example, if the set request message is used to request to configure the CIR attribute (or the PIR attribute) and the rate scale factor attribute, with reference to Table 2 above, it can be learned that the 11^{th} to 14^{th} bytes are the attribute value of the 4-byte CIR attribute (or the attribute value of the 4-byte PIR attribute), the 15^{th} and 16^{th} bytes are the attribute value of the 2-byte rate scale factor attribute, and other bytes (namely, the 17^{th} to 40^{th} bytes) of the message contents field are filled with 0s. In another example, if the set request message is used to request to configure only the rate scale factor attribute, the 11^{th} and 12^{th} bytes are the attribute value of the 2-byte rate scale factor attribute, and other bytes (namely, the 13^{th} to 40^{th} bytes) of the message contents field are filled with 0s. In an actual application, there may further be other examples, which are not further listed herein.

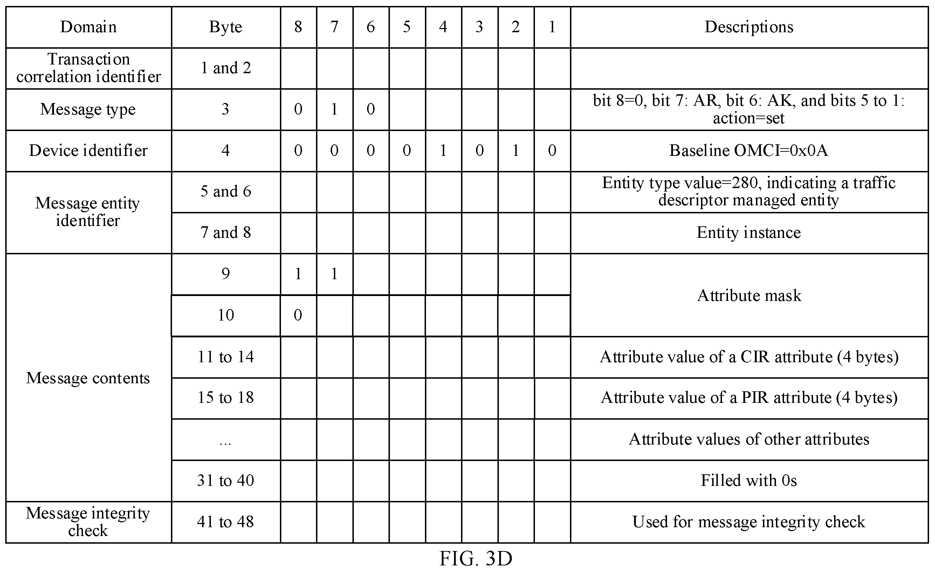

It should be noted that, in comparison with a set request message for configuring a CIR/PIR in the conventional technology shown in FIG. 3D, it can be learned that, in the conventional technology, because an attribute value of a rate scale factor attribute is not carried, an 8^{th} bit of a 10^{th} byte of a message contents field is 0, and the message contents field does not include the attribute value of the rate scale factor attribute.

It should be understood that in this embodiment, FIG. 3A, FIG. 3B, FIG. 3C, and FIG. 3D are all described by using a baseline OMCI message format (Baseline OMCI message format) as an example. In an actual application, various types of messages described in FIG. 3A, FIG. 3B, FIG. 3C, and FIG. 3D above may alternatively use an extended OMCI message format (Extended OMCI message format). Details are not described herein.

Optionally, the first message is encapsulated in a payload field of a downstream XG-PON encapsulation method (10-Gigabit passive optical network encapsulation method, XGEM) frame. A frame header (XGEM Header) of the downstream XGEM frame includes information used to distinguish between different OMCI XGEM ports (referred to as XGEM ports for short in the following), where the XGEM port is a logical port on a slave device and is used to carry data from a downstream PON port of the master device. XGEM port identifiers of different slave devices are different. Therefore, different slave devices may be distinguished based on the XGEM port identifiers. In this embodiment, an XGEM port identifier (XGEM port ID) in the frame header (XGEM Header) of the downstream XGEM frame is the same as identification information (for example, an ONU ID) of the first slave device, in other words, the XGEM port ID is the same as the ONU ID.

Step 202: The first slave device determines the second rate of the first slave device based on the rate scale factor and the first rate.

The second rate is the effective CIR and/or the effective PIR of the first slave device. For descriptions of the second rate, refer to step 201. Details are not described herein again.

In a possible implementation, the second rate is equal to the product of the first rate and the rate scale factor. The first slave device determines the second rate based on the product of the first rate and the rate scale factor. For example, if the attribute value of the CIR attribute obtained by the first slave device from the first message is 4,294,967,295 bytes/s (about 34.36 Gbit/s), and the attribute value of the rate scale factor attribute is 2, the effective CIR of the first slave device is a product of the attribute value of the CIR attribute and the attribute value of the rate scale factor attribute, namely, 8,589,934,590 bytes/s (about 68.72 Gbit/s). It can be learned that the master device can resolve the CIR/PIR configuration problem of the 50G PON and the future PON with the higher rate via the newly defined rate scale factor.

In this embodiment, the first slave device can receive the rate scale factor from the master device. The rate scale factor is the adjustment coefficient of the first rate (namely, the attribute value of the CIR attribute/PIR attribute). The first slave device determines the second rate (namely, the effective CIR/PIR of the first slave device) based on the rate scale factor and the first rate. Therefore, even if a value of the first rate is limited, the effective CIR/PIR of the first slave device can be adjusted based on the rate scale factor. In other words, the value of the CIR/PIR used when the first slave device operates is expanded without changing the existing attribute. In this way, the CIR/PIR configuration problem of the 50G PON and the future PON with the higher rate is resolved.

FIG. 4 is a diagram of another embodiment of an optical network communication method according to this application. In this embodiment, a master device reads an attribute from a first slave device via a get (get) message and a get response (get response) message. The first slave device is one of a plurality of slave devices connected to the master device. In this embodiment, interaction between the master device and the first slave device is used as an example for description. It is clear that an entity that performs an action of the master device in the method may alternatively be an apparatus, a module, or a chip in the master device, and an entity that performs an action of the first slave device in the method may alternatively be an apparatus, a module, or a chip in the first slave device. This is not specifically limited in this embodiment. For example, as shown in FIG. 4, the optical network communication method includes the following steps.

Step 401: The master device sends a second message to the first slave device. Correspondingly, the first slave device receives the second message from the master device.

For example, the master device sends the second message to the first slave device through an optical fiber. Correspondingly, the first slave device receives the second message from the master device through the optical fiber. The second message includes first indication information, the first indication information indicates the first slave device to report a rate scale factor, and the rate scale factor is an adjustment coefficient of a first rate. Optionally, the first indication information further indicates the first slave device to report the first rate, and the first rate is a CIR and/or a PIR. The rate scale factor and the first rate are used to determine a second rate, and the second rate is an effective rate of the CIR and/or an effective rate of the PIR of the first slave device. For explanations of the first rate, the rate scale factor, and the second rate, refer to related descriptions in step 201 above. Details are not described herein again.

In this embodiment, the first indication information may be an attribute mask. For descriptions of the attribute mask, refer to related descriptions in step 201 above. Details are not described herein again.

In a possible implementation, the first indication information is a first attribute mask, and the first attribute mask indicates that the second message is used to request the first slave device to report an attribute value of a rate scale factor attribute. For example, a bit corresponding to the rate scale factor attribute in the first attribute mask is 1, indicating that the first slave device is requested to report the attribute value of the rate scale factor attribute. Optionally, if the rate scale factor attribute is a 10^{th} attribute of a traffic descriptor entity, namely, a 9^{th} attribute after an ME ID attribute, the rate scale factor attribute corresponds to a 9^{th} bit in the first attribute mask, and the 9^{th} bit in the first attribute mask is 1.

Optionally, the first attribute mask further indicates the first slave device to report an attribute value of a CIR attribute and/or an attribute value of a PIR attribute. In an example, if the first attribute mask indicates to report the attribute value of the rate scale factor attribute, the attribute value of the CIR attribute, and the attribute value of the PIR attribute, a 1^{st} attribute in the first attribute mask is the CIR attribute, and a bit corresponding to the CIR attribute in the first attribute mask is 1, indicating that the first slave device is requested to report the attribute value of the CIR attribute; a 2^{nd} attribute in the first attribute mask is the PIR attribute, and a bit corresponding to the PIR attribute in the first attribute mask is 1, indicating that the first slave device is requested to report the attribute value of the PIR attribute; and a 9^{th} attribute in the first attribute mask is the rate scale factor attribute, and a bit corresponding to the rate scale factor attribute in the first attribute mask is 1, indicating that the first slave device is requested to report the attribute value of the rate scale factor attribute. It should be understood that, based on different attributes indicated to be reported by using the first attribute mask of the message, there may be another example of the first attribute mask. Details are not described herein.

In this embodiment, the first slave device is a registered and online slave device, an OMCI management channel is established between the first slave device and the master device, and the master device can communicate with the first slave device via an OMCI message. Therefore, the second message may be an OMCI message. Generally, the OMCI message includes a create (create) procedure-related message (for example, a create request message), a set (set) procedure-related message (for example, a set request message), and a get (get) procedure-related message (for example, a get request message). In this embodiment, the second message is a get (get) message (namely, a get request message). An identification information field of a managed entity of the second message includes identification information of a traffic descriptor managed entity, and a message contents field of the second message includes the first indication information, in other words, the message contents field of the second message includes the first attribute mask.

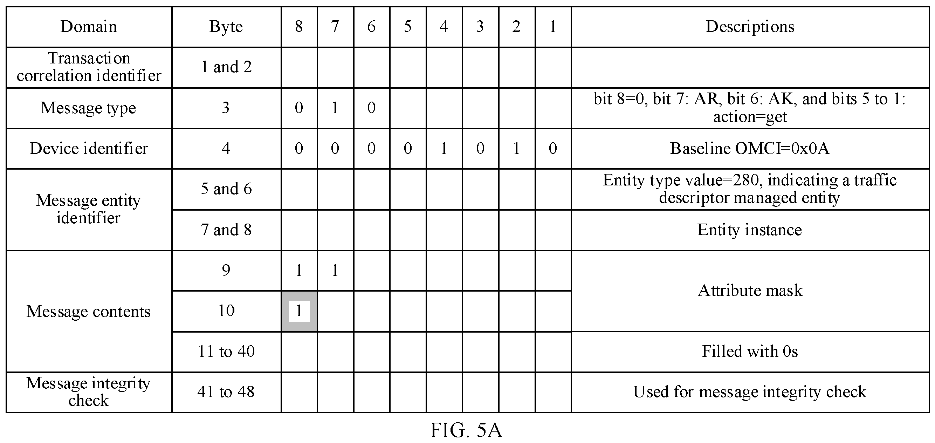

For example, FIG. 5A is a diagram of an example of a get (get) message (namely, a get request message) according to this application. In comparison with the create request message shown in FIG. 3A, the get request message shown in FIG. 5A is different only in a message type field and a message contents field. For explanations of other fields, refer to related descriptions of the example shown in FIG. 3A above. Details are not described herein again. As shown in FIG. 5A, a 3^{rd} byte is a message type indicated by the message type (message type, MT) field, where the message type is a get (get) request type. 9^{th} to 40^{th} bytes are the message contents (message contents) field. The 9^{th} and 10^{th} bytes are an attribute mask, indicating specific attributes to be requested. A mapping rule of the attribute mask is the same as the mapping rule of the attribute mask in the set request message shown in FIG. 3C above. Details are not described herein again. Specifically, an 8^{th} bit of the 9^{th} byte corresponds to the CIR attribute, a 7^{th} bit of the 9^{th} byte corresponds to the PIR attribute, and by analogy, an 8^{th} bit of the 10^{th} byte corresponds to the rate scale factor attribute. In an example, as shown in FIG. 5A, if the second message is used to request to report the attribute value of the CIR attribute, the attribute value of the PIR attribute, and the attribute value of the rate scale factor attribute, the 8^{th} bit of the 9^{th} byte is 1, indicating that a slave device is requested to report the attribute value of the CIR attribute; the 7^{th} bit of the 9^{th} byte is 1, indicating that the slave device is requested to report the attribute value of the PIR attribute; and the 8^{th} bit of the 10^{th} byte is 1, indicating that the slave device is requested to report the attribute value of the rate scale factor attribute. In another example, if the second message is used to request to report only the attribute value of the CIR attribute and the attribute value of the rate scale factor attribute, the 8^{th} bit of the 9^{th} byte is 1, indicating that a slave device is requested to report the attribute value of the CIR attribute; the 7^{th} bit of the 9^{th} byte is 0, indicating that the attribute value of the PIR attribute does not need to be reported; and the 8^{th} bit of the 10^{th} byte is 1, indicating that the slave device is requested to report the attribute value of the rate scale factor attribute. It should be understood that, based on different types of attribute values requested to be reported by using the second message, there may be another example of the attribute mask. Details are not described herein. In addition, other bytes of the message contents field are filled with 0s.

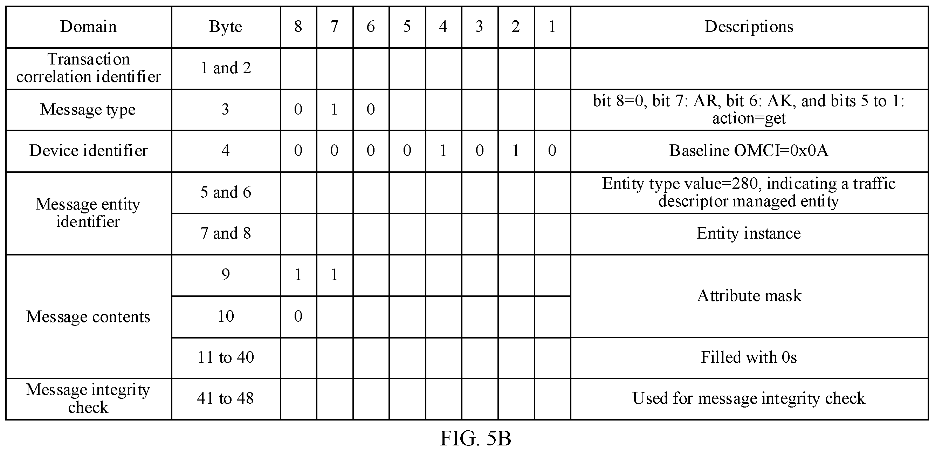

It should be noted that, in comparison with a get request message for configuring a CIR/PIR in a conventional technology shown in FIG. 5B, it can be learned that in the conventional technology, because a master device does not indicate a slave device to report a rate scale factor attribute, an 8^{th} bit of a 10^{th} byte of a message contents field is 0.

Optionally, the second message is encapsulated in a payload field of a downstream XGEM frame. A frame header (XGEM Header) of the downstream XGEM frame includes information used to distinguish between different OMCI XGEM ports (referred to as XGEM ports for short in the following), where the XGEM port is a logical port on a slave device and is used to carry data from a downstream PON port of the master device. XGEM port identifiers of different slave devices are different. Therefore, different slave devices may be distinguished based on the XGEM port identifiers. In this embodiment, an XGEM port identifier (XGEM port ID) in the frame header (XGEM Header) of the downstream XGEM frame is the same as identification information (for example, an ONU ID) of the first slave device, in other words, the XGEM port ID is the same as the ONU ID.

Step 402: The first slave device sends a third message to the master device. Correspondingly, the master device receives the third message from the first slave device.

For example, the first slave device sends the third message to the master device through the optical fiber. Correspondingly, the master device receives the third message from the first slave device through the optical fiber. The third message includes the rate scale factor and the first rate of the first slave device. For explanations of the rate scale factor and the first rate, refer to related descriptions in step 201 above. Details are not described herein again.

In addition, the third message is a response message of the second message. Because the second message is the get request message, the third message is a get response message, in other words, a message type of the third message is a get response. In addition, an identification information field of a managed entity of the third message includes the identification information of the traffic descriptor managed entity, a message contents field of the third message includes the first attribute mask and the attribute value of the rate scale factor attribute, and the bit corresponding to the rate scale factor attribute in the first attribute mask is 1. Optionally, the message contents field of the third message further includes the attribute value of the CIR attribute and/or the attribute value of the PIR attribute. The bit corresponding to the CIR attribute in the first attribute mask is 1, and/or the bit corresponding to the PIR attribute in the first attribute mask is 1. For explanations of the first attribute mask, refer to related descriptions in step 401 above. Details are not described herein again.

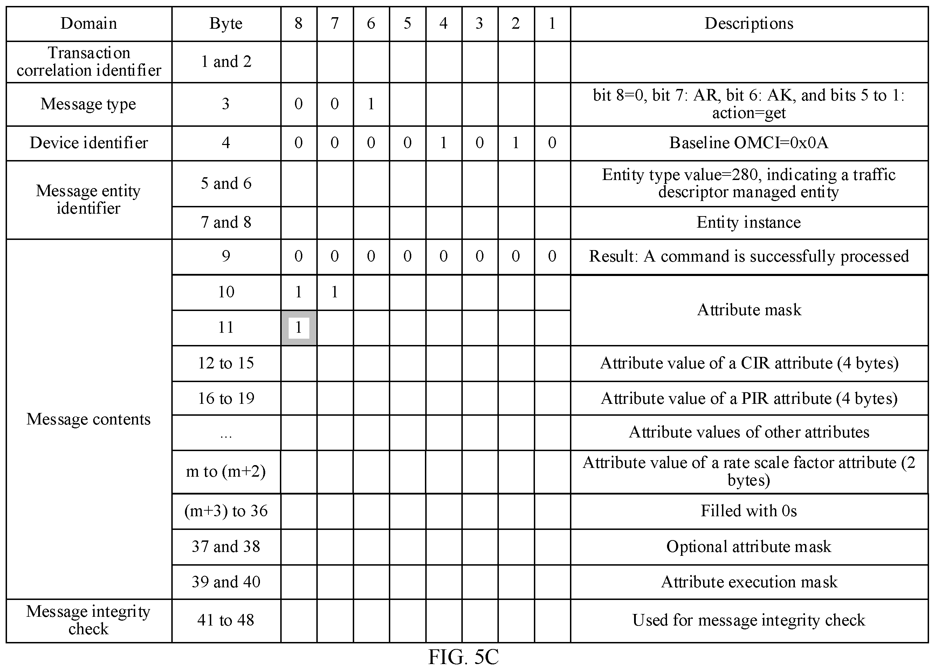

For example, FIG. 5C is an example diagram of a get response (get response) message according to this application. In comparison with the create request message shown in FIG. 3A, the get response message shown in FIG. 5C is different only in a message type field and a message contents field. For explanations of other fields, refer to related descriptions of the example shown in FIG. 3A above. Details are not described herein again. As shown in FIG. 5C, a 3^{rd} byte is a message type indicated by the message type (message type, MT) field, where the message type is a get response (get response) type. 9^{th} to 40^{th} bytes are the message contents (message contents) field. The 9^{th} byte indicates a processing result of a get operation. First four bits of the 9^{th} byte are fixed to "0000", in other words, 8^{th} to 5^{th} bits are fixed to "0000". Last four bits of the 9^{th} byte indicate a reason of the processing result. "0000" of 4^{th} to 1^{st} bits shown in FIG. 5C indicates that a command is successfully processed, in other words, an attribute mask (for example, the first attribute mask) in a request message (for example, the second message) is successfully obtained to indicate an attribute value that needs to be reported. The 10^{th} and 11^{th} bytes are the attribute mask, indicating specific attributes to be provided. A mapping rule of the attribute mask is the same as the mapping rule of the attribute mask in the set request message shown in FIG. 3C above. Details are not described herein again. It should be noted that when an attribute requested by using the get request message is the same as an attribute reported by using the get response message, an attribute mask in the second message is the same as an attribute mask in the third message. In this embodiment, an example in which both the second message and the third message carry the first attribute mask is used for description. Specifically, an 8^{th} bit of the 10^{th} byte corresponds to the CIR attribute, a 7^{th} bit of the 10^{th} byte corresponds to the PIR attribute, and by analogy, an 8^{th} bit of the 11^{th} byte corresponds to the rate scale factor attribute. In an example, as shown in FIG. 5C, if the third message carries the attribute value of the CIR attribute, the attribute value of the PIR attribute, and the attribute value of the rate scale factor attribute, the 8^{th} bit of the 10^{th} byte is 1, indicating that the message contents field carries the attribute value of the CIR attribute; the 7^{th} bit of the 10^{th} byte is 1, indicating that the message contents field carries the attribute value of the PIR attribute; and the 8^{th} bit of the 11^{th} byte is 1, indicating that the message contents field carries the attribute value of the rate scale factor attribute. In another example, if the third message carries the attribute value of the CIR attribute and the attribute value of the rate scale factor attribute, the 8^{th} bit of the 9^{th} byte is 1, indicating that the message contents field carries the attribute value of the CIR attribute; the 7^{th} bit of the 9^{th} byte is 0, indicating that the message contents field does not carry the attribute value of the PIR attribute; and the 8^{th} bit of the 10^{th} byte is 1, indicating that the message contents field carries the attribute value of the rate scale factor attribute. It should be understood that, based on different types of attribute values carried in the third message, there may be another example of the first attribute mask. Details are not described herein. In addition, the 37^{th} and 38^{th} bytes carry an optional attribute mask, and the 39^{th} and 40^{th} bytes carry an attribute execution mask. In addition, other bytes of the message contents field are used to carry attribute values of attributes indicated by the attribute mask.

It should be noted that the message contents field of the get response message is different from the message contents field of the create request message. A 1^{st} byte of the message contents field of the create request message begins with an attribute value of a 1^{st} set-by-create attribute, and space is allocated to each set-by-create attribute in the create message in sequence based on a size of the attribute. However, the message contents field of the get response message carries only an attribute value of an attribute indicated by the attribute mask, and does not necessarily carry attribute values of all set-by-create attributes. Optionally, the attribute value of the rate scale factor attribute may be carried in m^{th} to (m+2)^{th} bytes of the message contents field, where m is an integer greater than or equal to 12 and less than or equal to 34.

In an example, if the get response message carries attribute values of all attributes of the traffic descriptor ME, with reference to Table 2 above, it can be learned that the 12^{th} to 15^{th} bytes are the attribute value of the 4-byte CIR attribute, the 16^{th} to 19^{th} bytes are the attribute value of the 4-byte PIR attribute, and by analogy, the 32^{nd} and 33^{rd} bytes are the attribute value of the 2-byte rate scale factor attribute, and other bytes (namely, the 34^{th} to 36^{th} bytes) of the message contents field are filled with 0s. In another example, if the get response message provides the CIR attribute, the PIR attribute, and the rate scale factor attribute for the master device, with reference to Table 2 above, it can be learned that the 12^{th} to 15^{th} bytes are the attribute value of the 4-byte CIR attribute, the 16^{th} to 19^{th} bytes are the attribute value of the 4-byte PIR attribute, the 20^{th} and 21^{st} bytes are the attribute value of the 2-byte rate scale factor attribute, and other bytes (namely, the 22^{nd} to 36^{th} bytes) of the message contents field are filled with 0s. In another example, if the get response message provides the CIR attribute (or the PIR attribute) and the rate scale factor attribute for the master device, with reference to Table 2 above, it can be learned that the 12^{th} to 15^{th} bytes are the attribute value of the 4-byte CIR attribute (or the attribute value of the 4-byte PIR attribute), the 16^{th} and 17^{th} bytes are the attribute value of the 2-byte rate scale factor attribute, and other bytes (namely, the 18^{th} to 36^{th} bytes) of the message contents field are filled with 0s. In another example, if the get response message provides only the rate scale factor attribute for the master device, the 12^{th} and 13^{th} bytes are the attribute value of the 2-byte rate scale factor attribute, and other bytes (namely, the 14^{th} to 36^{th} bytes) of the message contents field are filled with 0s. In an actual application, there may further be other examples, which are further listed herein.

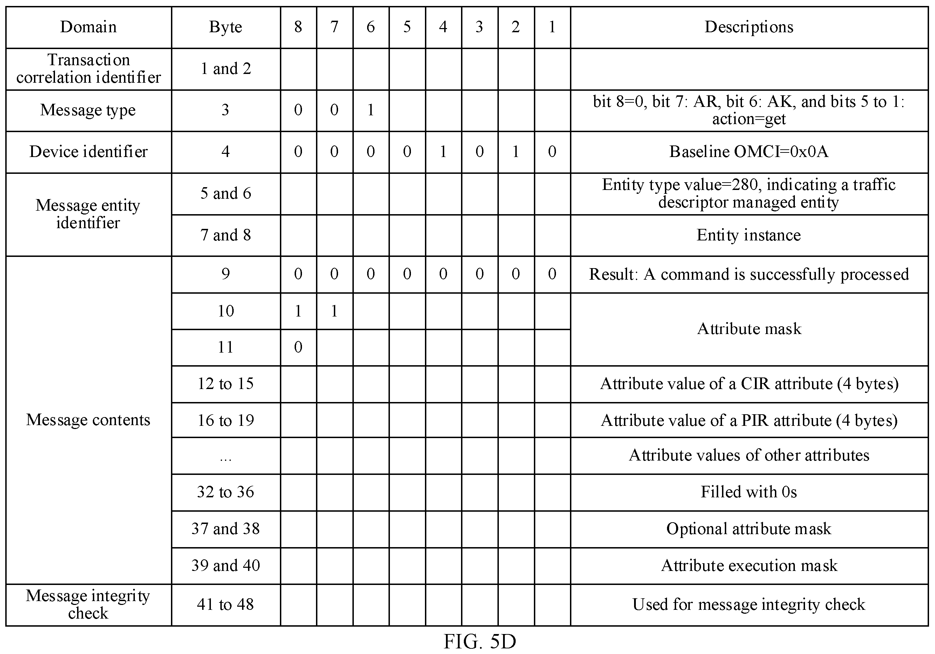

It should be noted that, in comparison with a get response message for configuring a CIR/PIR in the conventional technology shown in FIG. 5D, it can be learned that, in the conventional technology, because an attribute value of a rate scale factor attribute is not carried, an 8^{th} bit of an 11^{th} byte of a message contents field is 0, and the message contents field does not include the attribute value of the rate scale factor attribute.

It should be understood that in this embodiment, FIG. 5A, FIG. 5B, FIG. 5C, and FIG. 5D are all described by using a baseline OMCI message format (Baseline OMCI message format) as an example. In an actual application, various types of messages described in FIG. 5A, FIG. 5B, FIG. 5C, and FIG. 5D may alternatively use an extended OMCI message format (Extended OMCI message format). Details are not described herein.

Optionally, the third message is encapsulated in a payload field of an upstream XGEM frame. An XGEM port identifier (XGEM port ID) in a frame header (XGEM Header) of the upstream XGEM frame is the same as identification information (for example, an ONU ID) of the first slave device, in other words, the XGEM port ID is the same as the ONU ID.

In this embodiment, the first slave device can receive the first indication information from the master device, to indicate the first slave device to report the rate scale factor and the first rate, where the rate scale factor is the adjustment coefficient of the first rate (namely, the attribute value of the CIR attribute/PIR attribute). The first slave device reports the rate scale factor and the first rate of the first slave device after receiving the first indication information, to provide the effective CIR/PIR of the first slave device for the master device. In other words, a value of the CIR/PIR used when the first slave device operates is expanded without changing the existing attribute, and a problem of reporting a CIR/PIR of a 50G PON and a future PON with a higher rate is resolved.

The following describes a main procedure of a second solution of an optical network communication method according to this application with reference to FIG. 6 and FIG. 7.

FIG. 6 is a diagram of another embodiment of an optical network communication method according to this application. In this embodiment, a master device configures an attribute for a first slave device via a create (create) message or a set (set) message. The first slave device is one of a plurality of slave devices connected to the master device. In this embodiment, interaction between the master device and the first slave device is used as an example for description. It is clear that an entity that performs an action of the master device in the method may alternatively be an apparatus, a module, or a chip in the master device, and an entity that performs an action of the first slave device in the method may alternatively be an apparatus, a module, or a chip in the first slave device. This is not specifically limited in this embodiment. For example, as shown in FIG. 6, the optical network communication method includes the following steps.

Step 601: The master device sends a fourth message to the first slave device. Correspondingly, the first slave device receives the fourth message from the master device.

For example, the master device sends the fourth message to the first slave device through an optical fiber. Correspondingly, the first slave device receives the fourth message from the master device through the optical fiber.

The fourth message includes a third rate, and the third rate is a CIR and/or a PIR. Because the master device manages and maintains a CIR and a PIR of a slave device via a CIR attribute and a PIR attribute of a traffic descriptor ME, that the fourth message includes the third rate may be understood as that the fourth message carries an attribute value of the CIR attribute and/or an attribute value of the PIR attribute.

In addition, a unit of the third rate is related to a line bit rate of the first slave device and a preset threshold. When the line bit rate of the first slave device is less than or equal to the preset threshold, the unit of the third rate is bytes per second; or when the line bit rate of the first slave device is greater than the preset threshold, the unit of the third rate is N bytes per second, where N is an integer greater than 0. The line bit rate of the first slave device may be a line bit rate used when the first slave device operates. It should be noted that, before the first slave device receives the fourth message, the first slave device registers with the master device and is activated, and an OMCI management channel is established between the master device and the first slave device. In this process, the master device can learn of the line bit rate used when the first slave device operates.

In other words, a CIR attribute in a conventional technology and the CIR attribute provided in this embodiment have different definitions, and a PIR attribute in a conventional technology and the PIR attribute provided in this embodiment have different definitions. In the conventional technology, a unit of an attribute value of the CIR attribute is bytes per second, and a unit of an attribute value of the PIR attribute is bytes per second. However, in this application, a unit of the CIR attribute and a unit of the PIR attribute are related to a line bit rate that is of a slave device and that is to be configured by the master device and the preset threshold, and are not necessarily bytes per second. For example, for the CIR attribute, when the line bit rate that is of the slave device and that is to be configured by the master device is less than or equal to the preset threshold, the unit of the attribute value of the CIR attribute is bytes per second; or when the line bit rate that is of the slave device and that is to be configured by the master device is greater than the preset threshold, the unit of the attribute value of the CIR attribute is N bytes per second, where N is an integer greater than 0. For another example, for the PIR attribute, when the line bit rate that is of the slave device and that is to be configured by the master device is less than or equal to the preset threshold, the unit of the attribute value of the PIR attribute is bytes per second; or when the line bit rate that is of the slave device and that is to be configured by the master device is greater than the preset threshold, the unit of the attribute value of the PIR attribute is N bytes per second, where N is an integer greater than 0.

Optionally, a default value of N is 1. A value of N may be preconfigured, or may be determined by the master device and the slave device through negotiation. This is not limited in this application.

Optionally, the preset threshold is 9.95328 Gbit/s. In some scenarios, the preset threshold may also be referred to as 10 Gbit/s for short. Optionally, the preset threshold is less than 4,294,967,295 bytes/s (approximately 34.36 Gbit/s). In this embodiment, because a byte size carrying the attribute value of the CIR attribute is not changed, and a byte size carrying the attribute value of the PIR attribute is not changed, a maximum value of the attribute value of the CIR attribute is still 4,294,967,295 bytes/s (approximately 34.36 Gbit/s), and a maximum value of the attribute value of the PIR attribute is still 4,294,967,295 bytes/s (approximately 34.36 Gbit/s). Therefore, a value of the preset threshold is less than 4,294,967,295 bytes/s (approximately 34.36 Gbit/s).

In addition, the fourth message in this embodiment may be a create request message, or may be a set request message.

In a possible implementation, the fourth message is the create request message, in other words, a message type of the fourth message is a create request, to be specific, a message sent by the master device to the first slave device when the master device creates an instance of the traffic descriptor ME of the first slave device for the first time. In this case, an identification information field of a managed entity of the fourth message includes identification information of the traffic descriptor managed entity, and a message contents field of the fourth message includes the attribute value of the CIR attribute and/or the attribute value of the PIR attribute. A message format of the fourth message is the same as a message format of a create message for configuring a CIR/PIR in the conventional technology. For details, refer to the example shown in FIG. 3B above. Details are not described herein again.

In another possible implementation, the fourth message is the set request message, in other words, a message type of the fourth message is a set request. For example, the master device sends the set request message to the first slave device when an instance of the traffic descriptor ME of the first slave device needs to be reconfigured. In this case, an identification information field of a managed entity of the fourth message includes identification information of the traffic descriptor managed entity, and a message contents field of the fourth message includes the attribute value of the CIR attribute and/or the attribute value of the PIR attribute, and further includes a second attribute mask. The second attribute mask indicates that the message contents field carries the attribute value of the CIR attribute and the attribute value of the PIR attribute. A bit corresponding to the CIR attribute in the second attribute mask is 1, indicating that the message contents field carries the attribute value of the CIR attribute; and a bit corresponding to the PIR attribute in the second attribute mask is 1, indicating that the message contents field carries the attribute value of the PIR attribute.

Optionally, the fourth message is encapsulated in a payload field of a downstream XGEM frame. A frame header (XGEM Header) of the downstream XGEM frame includes information used to distinguish between different XGEM ports, where the XGEM port is a logical port on a slave device and is used to carry data from a downstream PON port of the master device. XGEM port identifiers of different slave devices are different. Therefore, different slave devices may be distinguished based on the XGEM port identifiers. In this embodiment, an XGEM port identifier (XGEM port ID) in the frame header (XGEM Header) of the downstream XGEM frame is the same as identification information (for example, an ONU ID) of the first slave device, in other words, the XGEM port ID is the same as the ONU ID.

Step 602: The first slave device determines the unit of the third rate based on the line bit rate of the first slave device and the preset threshold.

It may also be understood as that the first slave device determines an effective CIR and/or an effective PIR of the first slave device based on the line bit rate of the first slave device and the preset threshold. For explanations of the preset threshold, refer to step 601 above. Details are not described herein again. The effective CIR (effective CIR) of the first slave device may be understood as an effective CIR (effective CIR) of the first slave device, or may be understood as a CIR used when the first slave device operates. The effective PIR (effective PIR) of the first slave device may be understood as an effective PIR (effective PIR) of the first slave device, or may be understood as a PIR used when the first slave device operates.

In a possible implementation, the line bit rate of the first slave device is less than or equal to the preset threshold, and the first slave device determines that a value of the third rate (namely, the attribute value of the CIR attribute and/or the attribute value of the PIR attribute) is the effective CIR/PIR of the first slave device, with a unit of bytes per second. For example, if the line bit rate of the first slave device is less than or equal to the preset threshold, and the attribute value of the CIR attribute is A, a unit of the attribute value of the CIR attribute is bytes per second, and the effective CIR of the first slave device is A bytes per second. If the line bit rate of the first slave device is less than or equal to the preset threshold, and the attribute value of the PIR attribute is B, a unit of the attribute value of the PIR attribute is bytes per second, and the effective PIR of the first slave device is B bytes per second. A and B are both integers greater than 0.

In another possible implementation, the line bit rate of the first slave device is greater than the preset threshold, and the first slave device determines that a product of the value of the third rate (namely, the attribute value of the CIR attribute and/or the attribute value of the PIR attribute) and N is the effective CIR/PIR of the first slave device, with a unit of bytes per second. For example, if the line bit rate of the first slave device is greater than the preset threshold, and the attribute value of the CIR attribute is A, a unit of the attribute value of the CIR attribute is N bytes per second, and the first slave device determines that the effective CIR of the first slave device is A*N bytes per second. If the line bit rate of the first slave device is greater than the preset threshold, and the attribute value of the PIR attribute is B, a unit of the attribute value of the PIR attribute is N bytes per second, and the first slave device determines that the effective PIR of the first slave device is equal to B*N bytes per second. A, B, and N are all integers greater than 0.

In this embodiment, the unit of the third rate received by the first slave device from the master device is related to the line bit rate of the first slave device and the preset threshold, and the first slave device can determine the unit of the third rate based on the line bit rate of the first slave device and the preset threshold, in other words, determine the effective CIR/PIR of the first slave device. Therefore, even if the value of the third rate is limited, the first slave device can determine the unit of the third rate based on the line bit rate of the first slave device and the preset threshold, to further determine the effective CIR/PIR of the first slave device. In this way, a CIR/PIR configuration problem of a 50G PON and a future PON with a higher rate is resolved.

FIG. 7 is a diagram of another embodiment of an optical network communication method according to this application. In this embodiment, a master device reads an attribute from a first slave device via a get (get) message and a get response (get response) message. The first slave device is one of a plurality of slave devices connected to the master device. In this embodiment, interaction between the master device and the first slave device is used as an example for description. It is clear that an entity that performs an action of the master device in the method may alternatively be an apparatus, a module, or a chip in the master device, and an entity that performs an action of the first slave device in the method may alternatively be an apparatus, a module, or a chip in the first slave device. This is not specifically limited in this embodiment. For example, as shown in FIG. 7, the optical network communication method includes the following steps.

Step 701: The master device sends a fifth message to the first slave device. Correspondingly, the first slave device receives the fifth message from the master device.

For example, the master device sends the fifth message to the first slave device through an optical fiber. Correspondingly, the first slave device receives the fifth message from the master device through the optical fiber. The fifth message includes second indication information, the second indication information indicates the first slave device to report a third rate, the third rate is a CIR and/or a PIR, and a unit of the third rate is related to a line bit rate of the first slave device and a preset threshold. For explanations of the third rate, refer to related descriptions in step 601 above. Details are not described herein again.

In a possible implementation, the second indication information is a second attribute mask, and the second attribute mask indicates that the fifth message is used to request the first slave device to report an attribute value of a CIR attribute and/or an attribute value of a PIR attribute. Optionally, the second attribute mask is a 2-byte bit map, and the second attribute mask from a high-order bit to a low-order bit (in other words, from an 8^{th} bit to a 1^{st} bit) corresponds to a sequence of attributes after an ME ID in attributes of a traffic descriptor ME (namely, the sequence of the attributes after the ME ID shown in Table 2). For example, a 1^{st} attribute in the second attribute mask is the CIR attribute, and a bit corresponding to the CIR attribute in the second attribute mask is 1, indicating that the first slave device is requested to report the attribute value of the CIR attribute; and a 2^{nd} attribute in the second attribute mask is the PIR attribute, and a bit corresponding to the PIR attribute in the second attribute mask is 1, indicating that the first slave device is requested to report the attribute value of the PIR attribute.

In addition, the fifth message in this embodiment may be a get request message, in other words, a message type of the fifth message is a get request. In this case, the fifth message further includes identification information of the traffic descriptor managed entity, and a message contents field of the fifth message includes the second indication information (for example, the second attribute mask). A message format of the fifth message is the same as a message format of a get request message for configuring a CIR/PIR in a conventional technology. For details, refer to the example shown in FIG. 5B above. Details are not described herein again.

Optionally, the fifth message is encapsulated in a payload field of a downstream XGEM frame. A frame header (XGEM Header) of the downstream XGEM frame includes information used to distinguish between different XGEM ports, where the XGEM port is a logical port on a slave device and is used to carry data from a downstream PON port of the master device. XGEM port identifiers of different slave devices are different. Therefore, different slave devices may be distinguished based on the XGEM port identifiers. In this embodiment, an XGEM port identifier (XGEM port ID) in the frame header (XGEM Header) of the downstream XGEM frame is the same as identification information (for example, an ONU ID) of the first slave device, in other words, the XGEM port ID is the same as the ONU ID.

Step 702: The first slave device sends a sixth message to the master device. Correspondingly, the master device receives the sixth message from the first slave device.

For example, the first slave device sends the sixth message to the master device through the optical fiber. Correspondingly, the master device receives the sixth message from the first slave device through the optical fiber. The sixth message includes the third rate of the first slave device. When the line bit rate of the first slave device is less than or equal to the preset threshold, the unit of the third rate is bytes per second; or when the line bit rate of the first slave device is greater than the preset threshold, the unit of the third rate is N bytes per second, where N is an integer greater than 0. For explanations of the third rate, refer to related descriptions in step 601 above. Details are not described herein again.

In addition, the sixth message is a response message of the fifth message. Because the fifth message is the get request message, the sixth message is a get response message, in other words, a message type of the sixth message is a get response. In addition, an identification information field of a managed entity of the sixth message includes the identification information of the traffic descriptor managed entity, and a message contents field of the sixth message includes the second indication information (for example, the second attribute mask), the attribute value of the CIR attribute, and the attribute value of the PIR attribute. A message format of the sixth message is the same as a message format of a get response message for configuring the CIR/PIR in the conventional technology. For details, refer to the example shown in FIG. 5D above. Details are not described herein again.

It should be understood that, before the first slave device receives the fifth message, the first slave device registers with the master device and is activated, and an OMCI management channel is established between the master device and the first slave device. In this process, the first slave device can determine a line bit rate used during operation, and the master device can also learn of the line bit rate used when the first slave device operates. Therefore, after the master device receives the sixth message, the master device can determine an effective CIR and/or an effective PIR of the first slave device based on the attribute value of the CIR attribute and/or the attribute value of the PIR attribute that are/is carried in the sixth message, the line bit rate of the first slave device, and the preset threshold.

Optionally, the sixth message is encapsulated in a payload field of an upstream XGEM frame. An XGEM port identifier (XGEM port ID) in a frame header (XGEM Header) of the upstream XGEM frame is the same as the identification information (for example, the ONU ID) of the first slave device, in other words, the XGEM port ID is the same as the ONU ID.

In this embodiment, the first slave device can receive the second indication information from the master device, to indicate the first slave device to report the third rate (namely, the attribute value of the CIR attribute/PIR attribute). Because the unit of the third rate is related to the line bit rate of the first slave device and the preset threshold, the first slave device reports the attribute value of the CIR attribute/PIR attribute after receiving the second indication information, and the master device determines the effective CIR/PIR of the first slave device. In this way, the effective CIR/PIR of the first slave device is indirectly provided for the master device. In other words, a value of the CIR/PIR used when the first slave device operates is expanded without changing the existing attribute, and a problem of reporting a CIR/PIR of a 50G PON and a future PON with a higher rate is resolved.

As shown in FIG. 8, an embodiment of this application further provides a communication apparatus 80. For specific implementations of the master device and the slave device (for example, the first slave device) in the flowchart shown in FIG. 2, FIG. 4, FIG. 6, or FIG. 7, refer to an internal structure of the communication apparatus 80 shown in FIG. 8. When the communication apparatus 80 is configured to implement a function of the master device in the method shown in FIG. 2, FIG. 4, FIG. 6, or FIG. 7, the communication apparatus 80 may be an OLT. When the communication apparatus 80 is configured to implement a function of the slave device in the method shown in FIG. 2, FIG. 4, FIG. 6, or FIG. 7, the communication apparatus 80 may be an ONU or an ONT.

As shown in FIG. 8, the communication apparatus 80 may include a processor 801 and a transceiver 802. The processor 801 is coupled to the transceiver 802. The processor 801 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 801 may be one processor, or may include a plurality of processors. This is not specifically limited herein.

The transceiver 802 may also be referred to as a transceiver unit, a transceiver machine, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit. The receiving unit may also be referred to as a receiver, an input port, a receiving circuit, or the like. The sending unit may be referred to as a transmitter, a transmitter machine, a transmitter circuit, or the like. Optionally, when the communication apparatus 80 is configured to implement the function of the master device in the method shown in FIG. 2, FIG. 4, FIG. 6, or FIG. 7, the transceiver 802 may be configured to receive an upstream burst optical signal. Optionally, the transceiver 802 supports receiving of a burst optical signal at one or more upstream rates.

Optionally, the communication apparatus 80 further includes a memory 803. The processor 801 is coupled to the memory 803. The memory 803 is mainly configured to store a software program and data. The memory 803 may exist independently, and is connected to the processor 801. Optionally, the memory 803 and the processor 801 may be integrated, for example, integrated into one or more chips. The memory 803 can store program code for performing technical solutions in this embodiment of this application, and the processor 801 controls execution of the program code. Various types of executed computer program code may also be considered as drivers of the processor 801. The memory 803 may include a volatile memory (volatile memory), for example, a random access memory (random access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 803 may further include a combination of the foregoing types of memories. The memory 803 may be one memory, or may include a plurality of memories. For example, the memory 803 is configured to store various types of data.

In an implementation, the communication apparatus 80 is configured to implement a function of the master device in the method embodiment corresponding to FIG. 2. Specifically, the processor 801 is configured to generate a first message, where the first message includes a rate scale factor, the rate scale factor is an adjustment coefficient of a first rate, the first rate is a committed information rate CIR and/or a peak information rate PIR, the rate scale factor and the first rate are used to determine a second rate of a first slave device, and the second rate is an effective CIR and/or an effective PIR of the first slave device. The transceiver 802 is configured to send the first message to the first slave device. Optionally, the first message further includes the first rate.

In another implementation, the communication apparatus 80 is configured to implement a function of the first slave device in the method embodiment corresponding to FIG. 2. Specifically, the transceiver 802 is configured to receive a first message from a master device, where the first message includes a rate scale factor, the rate scale factor is an adjustment coefficient of a first rate, and the first rate is a committed information rate CIR and/or a peak information rate PIR. The processor 801 is configured to determine a second rate of the first slave device based on the rate scale factor and the first rate, where the second rate is an effective CIR and/or an effective PIR of the first slave device. Optionally, the first message further includes the first rate.

In another implementation, the communication apparatus 80 is configured to implement a function of the master device in the method embodiment corresponding to FIG. 4. Specifically, the processor 801 is configured to generate a second message, where the second message includes first indication information, the first indication information indicates a first slave device to report a rate scale factor, the rate scale factor is an adjustment coefficient of a first rate, and the first rate is a committed information rate CIR and/or a peak information rate PIR. The transceiver 802 is configured to send the second message to the first slave device. In addition, the transceiver 802 is further configured to receive a third message from the first slave device, where the third message includes the rate scale factor of the first slave device. Optionally, the first indication information further indicates the first slave device to report the first rate. In this case, the third message further includes the first rate.

In another implementation, the communication apparatus 80 is configured to implement a function of the first slave device in the method embodiment corresponding to FIG. 4. Specifically, the transceiver 802 is configured to receive a second message from a master device, where the second message includes first indication information, the first indication information indicates the first slave device to report a rate scale factor, the rate scale factor is an adjustment coefficient of a first rate, and the first rate is a committed information rate CIR and/or a peak information rate PIR. The processor 801 is configured to generate a third message, where the third message includes the rate scale factor of the first slave device. In addition, the transceiver 802 is further configured to send the third message to the master device. Optionally, the first indication information further indicates the first slave device to report the first rate. In this case, the third message further includes the first rate.

In another implementation, the communication apparatus 80 is configured to implement a function of the master device in the method embodiment corresponding to FIG. 6. Specifically, the processor 801 is configured to generate a fourth message, where the fourth message includes a third rate, the third rate is a committed information rate CIR and/or a peak information rate PIR, a unit of the third rate is related to a line bit rate of a first slave device and a preset threshold, and the line bit rate of the first slave device and the preset threshold are used to determine the unit of the third rate. The transceiver 802 is configured to send the fourth message to the first slave device.

In another implementation, the communication apparatus 80 is configured to implement a function of the first slave device in the method embodiment corresponding to FIG. 6. Specifically, the transceiver 802 is configured to receive a fourth message from a master device, where the fourth message includes a third rate, the third rate is a committed information rate CIR and/or a peak information rate PIR, and a unit of the third rate is related to a line bit rate of the first slave device and a preset threshold. The processor 801 is configured to determine the unit of the third rate based on the line bit rate of the first slave device and the preset threshold.

In another implementation, the communication apparatus 80 is configured to implement a function of the master device in the method embodiment corresponding to FIG. 7. Specifically, the processor 801 is configured to generate a fifth message, where the fifth message includes second indication information, the second indication information indicates a first slave device to report a third rate, the third rate is a committed information rate CIR and/or a peak information rate PIR, and a unit of the third rate is related to a line bit rate of the first slave device and a preset threshold. The transceiver 802 is configured to send the fifth message to the first slave device. In addition, the transceiver 802 is further configured to receive a sixth message from the first slave device, where the sixth message includes the third rate of the first slave device.

In another implementation, the communication apparatus 80 is configured to implement a function of the first slave device in the method embodiment corresponding to FIG. 7. Specifically, the transceiver 802 is configured to receive a fifth message from a master device, where the fifth message includes second indication information, the second indication information indicates the first slave device to report a third rate, the third rate is a committed information rate CIR and/or a peak information rate PIR, and a unit of the third rate is related to a line bit rate of the first slave device and a preset threshold. The processor 801 is configured to generate a sixth message, where the sixth message includes the third rate of the first slave device. The transceiver 802 is further configured to send the sixth message to the master device.

For details, refer to related descriptions in the foregoing embodiment corresponding to FIG. 2, FIG. 4, FIG. 6, or FIG. 7. Details are not described herein again.

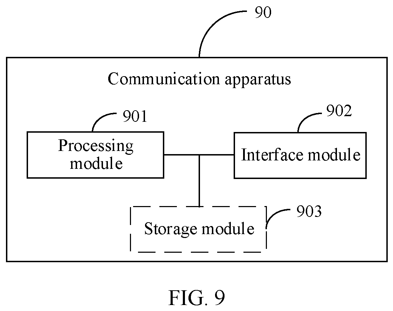

As shown in FIG. 9, this application further provides a communication apparatus 90. The communication apparatus 90 may be a slave device (for example, a first slave device) or a master device, or may be a component (for example, an integrated circuit or a chip) of the slave device (for example, the first slave device) or the master device. The communication apparatus 90 may alternatively be another communication module configured to implement the method in the method embodiments of this application.

The communication apparatus 90 may include a processing module 901 (or referred to as a processing unit). Optionally, the communication apparatus 90 may further include an interface module 902 (or referred to as a transceiver unit or a transceiver module) and a storage module 903 (or referred to as a storage unit). The interface module 902 is configured to implement communication with another device. The interface module 902 may be, for example, a transceiver module or an input/output module.

In a possible design, one or more modules in FIG. 9 may be implemented by one or more processors, may be implemented by one or more processors and one or more memories, may be implemented by one or more processors and one or more transceivers, or may be implemented by one or more processors, one or more memories, and one or more transceivers. This is not limited in this embodiment of this application. The processor, the memory, and the transceiver may be disposed separately or may be integrated.

The communication apparatus 90 has a function of implementing the slave device (for example, the first slave device) described in embodiments of this application. For example, the communication apparatus 90 includes a module, a unit, or a means (means) corresponding to the slave device (for example, the first slave device) performing the steps related to the slave device (for example, the first slave device) described in embodiments of this application. The function, the unit, or the means (means) may be implemented by software, may be implemented by hardware, may be implemented by hardware executing corresponding software, or may be implemented by a combination of software and hardware. For details, further refer to corresponding descriptions in the foregoing corresponding method embodiments. Specifically, refer to the communication apparatus 80 in the embodiment corresponding to FIG. 8.

Alternatively, the communication apparatus 90 has a function of implementing the master device described in embodiments of this application. For example, the communication apparatus 90 includes a module, a unit, or a means (means) corresponding to the master device performing the steps related to the master device described in embodiments of this application. The function, the unit, or the means (means) may be implemented by software, may be implemented by hardware, may be implemented by hardware executing corresponding software, or may be implemented by a combination of software and hardware. For details, further refer to corresponding descriptions in the foregoing corresponding method embodiments. Specifically, refer to the communication apparatus 80 in the embodiment corresponding to FIG. 8.

In addition, this application provides a computer program product. The computer program product includes one or more computer instructions. When the computer program instructions are loaded and executed on a computer, all or a part of procedures or functions according to embodiments of this application are generated. For example, the method related to the slave device (for example, the first slave device) in FIG. 2, FIG. 4, FIG. 6, or FIG. 7 is implemented. For another example, the method related to the master device in FIG. 2, FIG. 4, FIG. 6, or FIG. 7 is implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program, and the computer program is executed by a processor to implement the method related to the slave device (for example, the first slave device) in FIG. 2, FIG. 4, FIG. 6, or FIG. 7.

In addition, this application further provides a computer-readable storage medium. The storage medium stores a computer program, and the computer program is executed by a processor to implement the method related to the master device in FIG. 2, FIG. 4, FIG. 6, or FIG. 7.

It may be clearly understood by persons skilled in the art that, for the purpose of convenient and brief description, for a detailed working process of the described system, apparatus, and unit, refer to a corresponding process in the foregoing method embodiments. Details are not described herein again.

The foregoing embodiments are merely intended to describe the technical solutions of this application, but not intended to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An optical network communication method, applied to an optical network, wherein the optical network comprises a master device and a slave device, and the method comprises:
receiving, by the slave device, a first message from the master device, wherein the first message comprises a rate scale factor, the rate scale factor is an adjustment coefficient of a first rate, and the first rate is a first committed information rate CIR and/or a first peak information rate PIR; and
determining, by the slave device, an effective CIR and/or an effective PIR based on the rate scale factor and the first rate.

2. The method according to claim 1, wherein a default value of the rate scale factor is 1.

3. The method according to claim 1, wherein a value of the rate scale factor is an integer greater than 0.

4. The method according to claim 1, wherein the effective CIR is equal to a product of the first CIR and the rate scale factor, and/or the effective PIR is equal to a product of the first PIR and the rate scale factor.

5. The method according to claim 1, wherein the first message further comprises identification information of a traffic descriptor managed entity.

6. The method according to claim 1, wherein the first message further comprises the first rate.

7. The method according to any one of claims 1 to 6, wherein a message type of the first message is a set request or a create request.

8. The method according to any one of claims 1 to 6, wherein the rate scale factor occupies one byte in the first message.

9. The method according to any one of claims 1 to 6, wherein the first message is encapsulated in a payload field of a downstream 10-Gigabit-capable symmetric passive optical network encapsulation method XGEM frame.

10. The method according to any one of claims 1 to 6, wherein an XGEM port identifier in a frame header of an XGEM frame encapsulating the first message is the same as identification information of the slave device.

11. The method according to any one of claims 1 to 6, wherein the master device is an optical line termination OLT, and the slave device is an optical network unit ONU.

12. An optical network communication method, applied to an optical network, wherein the optical network comprises a master device and a slave device, and the method comprises:
sending, by the master device, a first message to the slave device, wherein the first message comprises a rate scale factor, the rate scale factor is an adjustment coefficient of a first rate, the first rate is a first committed information rate CIR and/or a first peak information rate PIR, and the rate scale factor and the first rate are used to determine an effective CIR and/or an effective PIR.

13. The method according to claim 12, wherein a default value of the rate scale factor is 1.

14. The method according to claim 12, wherein a value of the rate scale factor is an integer greater than 0.

15. The method according to claim 12, wherein the effective CIR is equal to a product of the first CIR and the rate scale factor, and/or the effective PIR is equal to a product of the first PIR and the rate scale factor.

16. The method according to claim 12, wherein the first message further comprises identification information of a traffic descriptor managed entity.

17. The method according to claim 12, wherein the first message further comprises the first rate.

18. The method according to any one of claims 12 to 17, wherein a message type of the first message is a set request or a create request.

19. The method according to any one of claims 12 to 17, wherein the rate scale factor occupies one byte in the first message.

20. The method according to any one of claims 12 to 17, wherein the master device is an optical line termination OLT, and the slave device is an optical network unit ONU.

21. An optical network communication method, applied to an optical network, wherein the optical network comprises a master device and a slave device, and the method comprises:
receiving, by the slave device, a second message from the master device, wherein the second message comprises first indication information, the first indication information indicates the slave device to report a rate scale factor, the rate scale factor is an adjustment coefficient of a first rate, and the first rate is a first committed information rate CIR and/or a first peak information rate PIR; and
sending, by the slave device, a third message to the master device, wherein the third message comprises the rate scale factor of the slave device.

22. The method according to claim 21, wherein a default value of the rate scale factor is 1.

23. The method according to claim 21, wherein a value of the rate scale factor is an integer greater than 0.

24. The method according to claim 21, wherein the rate scale factor and the first rate are used to determine an effective CIR and/or an effective PIR.

25. The method according to claim 24, wherein the effective CIR is equal to a product of the first CIR and the rate scale factor, and/or the effective PIR is equal to a product of the first PIR and the rate scale factor.

26. The method according to any one of claims 21 to 25, wherein the second message further comprises identification information of a traffic descriptor managed entity, and the third message further comprises identification information of the traffic descriptor managed entity.

27. The method according to any one of claims 21 to 25, wherein the first indication information comprises a first attribute mask, and a bit corresponding to a rate scale factor attribute in the first attribute mask is 1.

28. The method according to any one of claims 21 to 25, wherein the first indication information comprises a first attribute mask, and the rate scale factor attribute corresponds to a 9th bit in the first attribute mask.

29. The method according to any one of claims 21 to 25, wherein the first indication information further indicates the slave device to report the first rate, and the third message further comprises the first rate.

30. An optical network communication method, applied to an optical network, wherein the optical network comprises a master device and a slave device, and the method comprises:
sending, by the master device, a second message to the slave device, wherein the second message comprises first indication information, the first indication information indicates the slave device to report a rate scale factor, the rate scale factor is an adjustment coefficient of a first rate, and the first rate is a first committed information rate CIR and/or a first peak information rate PIR; and
receiving, by the master device, a third message from the slave device, wherein the third message comprises the rate scale factor of the slave device.

31. The method according to claim 30, wherein a default value of the rate scale factor is 1.

32. The method according to claim 30, wherein a value of the rate scale factor is an integer greater than 0.

33. The method according to claim 30, wherein the rate scale factor and the first rate are used to determine an effective CIR and/or an effective PIR.

34. The method according to claim 33, wherein the effective CIR is equal to a product of the first CIR and the rate scale factor, and/or the effective PIR is equal to a product of the first PIR and the rate scale factor.

35. The method according to any one of claims 30 to 34, wherein the second message further comprises identification information of a traffic descriptor managed entity, and the third message further comprises identification information of the traffic descriptor managed entity.

36. The method according to any one of claims 30 to 34, wherein the first indication information comprises a first attribute mask, and a bit corresponding to a rate scale factor attribute in the first attribute mask is 1.

37. The method according to any one of claims 30 to 34, wherein the first indication information comprises a first attribute mask, and the rate scale factor attribute corresponds to a 9th bit in the first attribute mask.

38. The method according to any one of claims 30 to 34, wherein the first indication information further indicates the slave device to report the first rate, and the third message further comprises the first rate.

39. A communication apparatus, wherein the communication apparatus is configured to implement the method according to any one of claims 1 to 11, or implement the method according to any one of claims 21 to 29.

40. A communication apparatus, wherein the communication apparatus is configured to implement the method according to any one of claims 12 to 20, or implement the method according to any one of claims 30 to 38.

41. A communication system, comprising: the communication apparatus according to claim 39; and the communication apparatus according to claim 40.

42. A computer-readable storage medium, storing a computer program, wherein the computer program is executable by a processor, to cause a computer to perform the method according to any one of claims 1 to 38.

43. A computer program product, comprising computer program instructions, wherein when the computer program instructions are run on a computer, the computer is caused to perform the method according to any one of claims 1 to 38.
